(19) Europäisches Patentamt
European Patent Office
Office européen des brevets

(11) **EP 2 673 106 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(21) Anmeldenummer: **12704050.9**

(22) Anmeldetag: **09.02.2012**

(51) Int Cl.:
*B23K 26/067* (2006.01)     *B23K 26/00* (2014.01)
*B23K 26/073* (2006.01)     *G03H 1/30* (2006.01)

(86) Internationale Anmeldenummer:
**PCT/EP2012/052244**

(87) Internationale Veröffentlichungsnummer:
**WO 2012/107535 (16.08.2012 Gazette 2012/33)**

(54) **VORRICHTUNG, ANORDNUNG UND VERFAHREN ZUR INTERFERENZSTRUKTURIERUNG VON FLÄCHIGEN PROBEN**

DEVICE, SYSTEM AND METHOD FOR TEXTURING FLAT WORKPIECES BY MEANS OF INTERFERENCE LIGHT

DISPOSITIF, SYTÈME ET MÉTHODE POUR LA TEXTURATION DE PIÈCES PLATES PAR INTERFÉRENCES LUMINEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2011 DE 102011011734**

(43) Veröffentlichungstag der Anmeldung:
**18.12.2013 Patentblatt 2013/51**

(73) Patentinhaber: **Fraunhofer-Gesellschaft zur Förderung der angewandten Forschung e.V.
80686 München (DE)**

(72) Erfinder:
• **LASAGNI, Andrés Fabián
01723 Grumbach (DE)**
• **ROCH, Teja
01309 Dresden (DE)**
• **BEYER, Eckhard
01328 Dresden (DE)**

(74) Vertreter: **Pfenning, Meinig & Partner mbB
Patent- und Rechtsanwälte
An der Frauenkirche 20
01067 Dresden (DE)**

(56) Entgegenhaltungen:
**EP-A1- 1 586 405     US-A- 5 072 091**

**Beschreibung**

Die vorliegende Erfindung bezieht sich auf die Strukturierung von flächigen Proben mit Lasersystemen, insbesondere mit Faserlaser oder Lasersystemen mit hoher Pulsfrequenz.

Aus dem Stand der Technik ist bekannt (US 6,549,309 B1), zum Einbringen eines Interferenzmusters einen Strahlteileraufbau zu verwenden, der einen Strahlteiler mit mehreren Umlenkspiegeln so kombiniert, dass die Strahlung eines Lasers aus unterschiedlichen Richtungen auf die zu strukturierende Probe eingestrahlt wird. Die aus unterschiedlichen Richtungen einfallenden Strahlteile erzeugen im Probenbereich Interferenzen, so dass hierdurch eine entsprechende Strukturierung der Probe erfolgen kann.

Ebenfalls ist aus dem Stand der Technik der Einsatz von diffraktiven optischen Elementen (Gittern) bekannt, um eine Interferenzstrukturierung von Proben Die aus dem Stand der Technik bekannten Vorrichtungen haben insbesondere den Nachteil, dass für die Strukturierung der Materialien bzw. Proben Lasersysteme mit einer hohen Pulsenergie notwendig sind. Deswegen sind Lasersysteme mit einer hohen Pulsfrequenz (Wiederholrate) und niedrigen Pulsenergien nicht geeignet. Zudem ist bei den bekannten Vorrichtungen die pro Zeiteinheit strukturierbare Fläche in der Regel begrenzt.

Ein Verfahren und eine Vorrichtung für eine Bearbeitung metallischer Oberflächen mit Laserstrahlen, ist auch aus US 5,072,091 A bekannt. Dabei sollen irreguläre Muster durch eine Interferenzstrukturierung ausgebildet werden können.

Die EP 1 586 405 A1 betrifft Möglichkeiten zur Ausbildung periodischer Strukturen die durch Interferenzstrukturierung mit Laserstrahlung ausgebildet werden können.

Aufgabe der vorliegenden Erfindung ist es daher, ausgehend vom Stand der Technik Vorrichtungen und Verfahren zur Laserinterferenzstrukturierung von flächigen Proben zur Verfügung zu stellen, mit denen flächige Proben einfach, zuverlässig, mit einer deutlichen Erhöhung der Bearbeitungsgeschwindigkeit und auch unter Einsatz von Lasersystemen mit hohen Pulsfrequenzen und niedrigen Pulsenergien strukturiert werden können.

Diese Aufgabe wird durch eine Vorrichtung gemäß Anspruch 1, durch eine Anordnung gemäß Anspruch 13 sowie durch ein Verfahren gemäß Anspruch 14 gelöst. Vorteilhafte Ausgestaltungsformen der Vorrichtung, der Anordnung oder des Verfahrens lassen sich jeweils den abhängigen Ansprüchen entnehmen.

Nachfolgend wird die vorliegende Erfindung zunächst allgemein, dann anhand mehrerer Ausführungsbeispiele detailliert beschrieben. Die in den einzelnen Ausführungsbeispielen in Kombination miteinander gezeigten Merkmale müssen im Rahmen der vorliegenden Erfindung jedoch nicht in genau den in den Ausführungsbeispielen auftretenden Kombinationen verwirklicht sein, sondern können auch auf andere Art und Weise realisiert werden. Insbesondere können einzelne der in den Ausführungsbeispielen gezeigten Merkmale auch weggelassen oder anders angeordnet werden.

Die Grundidee der erfindungsgemäßen Lösung basiert auf einer Kombination unterschiedlicher optischer Elemente (Prisma, insbesondere Biprisma, und Fokussierelement, insbesondere Zylinderlinse) mit einer Bewegung und/oder Auslenkung des Laserstrahls und/oder der zu strukturierenden flächigen Probe. Die einzelnen optischen Elemente (z.B. das Fokussierelement) können dabei, wie nachfolgend noch im Detail beschrieben ist, wiederum selbst aus mehreren einzelnen Teilen (Linsen oder dergleichen), also mehrteilig aufgebaut sein. Besonders vorteilhaft werden zur Bewegung des Laserstrahls Galvanometerscanner bzw. Bewegungseinheiten, die Strahlumlenkelemente (insbesondere Spiegel) aufweisen, die mittels eines Galvanometerantriebs positionierbar sind, verwendet. Die Steuerung von Strahlumlenkelementen mithilfe von Galvanometerantrieben ist aus dem Stand der Technik bereits bekannt (DE 10 2005 024 086 A1 oder JP 2003-307700 A), so dass auf eine Schilderung der Details eines solchen Antriebs für Strahlumlenkelemente verzichtet wird.

Eine erfindungsgemäße Vorrichtung zur Interferenzstrukturierung einer flächigen Probe weist einen Laser und im Strahlengang nach diesem Laser ein zur Fokussierung der Laserstrahlung ausgebildetes Fokussierelement auf. Das Fokussierelement fokussiert die Laserstrahlung lediglich in einer Raumrichtung, ohne jedoch die Laserstrahlung in die Richtung senkrecht zu dieser Raumrichtung zu fokussieren. Als Fokussierelement kann insbesondere eine Zylinderlinse eingesetzt werden. Im Strahlengang des Lasers ist ebenfalls ein Prisma (nachfolgend: erstes Prisma) angeordnet (vorzugsweise ein Biprisma), mit dem die Laserstrahlung in einer zweiten Raumrichtung, die nicht mit der ersten Raumrichtung zusammenfällt, also einen Winkel ≠ 0° zu ihr aufweist, und die bevorzugt zur ersten Raumrichtung orthogonal ist, mit zwei Strahlenbündeln so auf ein Probenvolumen gerichtet wird, dass diese beiden Strahlenbündel innerhalb des Probenvolumens in einem Interferenzbereich interferieren. Im Interferenzbereich des Probenvolumens wird dann die flächige Probe bzw. die zu strukturierende Oberfläche der flächigen Probe angeordnet. Schließlich umfasst die Vorrichtung eine Bewegungseinheit, mit der die Laserstrahlung zumindest in der ersten oder der zweiten, bevorzugt jedoch in der ersten und der zweiten Raumrichtung bewegt werden kann, um eine vorbestimmten, zu bearbeitenden Flächenabschnitt der Probe durch die Interferenzmaxima der Laserstrahlung im Interferenzbereich zu strukturieren. Alternativ dazu (oder auch in Kombination damit) kann die Bewegungseinheit auch so ausgebildet sein, dass die Probe und/oder das Probenvolumen (samt Probe) in die erste, die zweite oder in die erste und die zweite Raumrichtung bewegt werden kann.

Damit im Bereich der Interferenzmaxima der Laserstrahlung im Probenvolumen ein Materialabtrag, eine Materialaufschmelzung, eine Phasenumwandlung oder lokale Änderungen der Chemischen Eigenschaften (also die Strukturierung der Probe) erfolgen kann, muss die in diesen Maxima am Ort der Probe vorliegende Energiedichte der Laserstrahlung geeignet gewählt werden, z.B. zwischen 0,1 und 10 J/cm2. Dies kann durch geeignete Wahl des Lasers und des Fokussierelementes (Erzielen einer möglichst kleinen Fokusgröße in Richtung der ersten Raumrichtung) realisiert werden.

In einer besonders bevorzugten Ausgestaltungsvariante ist die erfindungsgemäße Bewegungseinheit auf Basis eines Galvanometerscanners ausgebildet: Die Bewegungseinheit umfasst dabei ein oder mehrere im Strahlengang des Lasers angeordnete(s) bewegliche(s) Strahlumlenkelement(e). Die Strahlumlenkelemente - insbesondere Spiegel oder auch Spiegelprismen - sind dreh- oder schwenkbar ausgebildet und so angeordnet, dass die Laserstrahlung (bzw. die Strahlenbündel derselben) in mindestens einer der beiden vorgenannten Raumrichtungen bewegbar ist/sind. Die genaue Positionierung oder Winkeleinstellung der einzelnen Strahlumlenkelemente erfolgt somit mittels eines Galvanometerantriebs. Bevorzugt sind die Strahlumlenkelemente im Strahlengang des Lasers vor dem Fokussierelement und vor dem ersten Prisma angeordnet und (durch den Antrieb) so ansteuerbar, dass der Einfallswinkel und/oder der Einfallsort der Laserstrahlung auf den den Strahlumlenkelementen folgenden optischen Elementen, also der Strahlengang variiert werden kann. Somit kann der Einfall der Laserstrahlung auf das Fokussierelement oder das erste Prisma (oder auf ein optisches Element wie beispielsweise einen Kollimator oder einen Strahlaufweiter, der vor dem Fokussierelement und dem ersten Prisma, jedoch nach den Umlenkelementen angeordnet ist) so gestaltet werden, dass die einfallende Laserstrahlung durch den Antrieb der Strahlumlenkelemente eine vordefinierte Fläche überstreicht. Werden Einfallswinkel und/oder Einfallsort der einfallenden Strahlung so auf der Einfallsseite variiert, so ergibt sich entsprechend eine Verschiebung (Wandern) des Interferenzbereiches auf der Ausfallseite (nach dem Fokussierelement und dem ersten Prisma), so dass ein vordefinierter Flächenbereich der Probe durch Materialabtrag (oder Materialaufschmelzung, etc.) im Bereich der wandernden Interferenzmaxima strukturiert werden kann.

Die Strahlumlenkelemente müssen jedoch nicht im Strahlengang vor dem Fokussierelement und vor dem ersten Prisma angeordnet sein: So ist auch eine Anordnung denkbar, bei der im Strahlengang zunächst ein Biprisma und dann ein zweiteiliges Fokussierelement umfassend eine Zylinderlinse und ein F-Theta Objektiv folgt, wobei dann zwischen der Zylinderlinse und dem F-Theta Objektiv des Fokussierelementes ein oder auch mehrere Strahlumlenkelement(e) angeordnet ist/sind. Auch ein einteiliges F-Theta Objektiv, das den Strahl nur in eine Raumrichtung fokussiert (zylindrisches F-Theta Objektiv) und gleichzeitig dafür sorgt, dass der Laserstrahlfokus über den gesamten abscanbaren Bereich (Scanfeld) in ein und derselben Ebene (Oberfläche der Probe) liegt, kann anstelle einer Zylinderlinse eingesetzt werden.

Alternativ dazu (oder in Kombination damit) kann die Bewegungseinheit auf der Strahlenausfallseite auch eine bewegliche Verschiebeinheit aufweisen. Bei letzterer kann es sich um einen drehbaren Tisch, einen x-y-Verschiebetisch oder auch um eine bandbasierte Rolle-zu-Rolle-Transporteinheit handeln. Die Verschiebeinheit ist dabei so ausgebildet, dass das Probenvolumen (bzw. die darin angeordnete Probe) in der Ebene der ersten und der zweiten Raumrichtung translatorisch und/oder rotatorisch verschiebbar ist. Besonders bevorzugt ist die Verschiebeinheit (z.B. der Verschiebetisch) so ausgebildet, dass mit ihr die Probe zusätzlich auch senkrecht zur Ebene der ersten und zweiten Raumrichtung verschoben werden kann.

Auch drehbare Rotationseinheiten (z.B. zylindrische Walzen), auf deren Oberfläche die Probe angeordnet werden kann, können als Bewegungseinheit verwendet werden: So ist eine zylindrische Walze, auf deren Mantelfläche die Probe aufgespannt wird, denkbar, die um eine Rotationsachse in der Ebene der ersten und der zweiten Raumrichtung rotiert wird. Durch Drehung dieser Mantelfläche im Interferenzbereich erfolgt dann eine Strukturierung der Probe entlang der Mantelfläche.

Erfindungsgemäß kann das Fokussierelement im Strahlengang vor dem ersten Prisma angeordnet sein (in diesem Fall erfolgt zunächst die Fokussierung und dann die Aufsplittung des Laserstrahlengangs in die beiden im Interferenzbereich interferierenden Strahlenbündel). Alternativ dazu ist jedoch auch die umgekehrte Anordnung im Strahlengang möglich.

Vorzugsweise ist vor dem Fokussierelement und vor dem ersten Prisma im Strahlengang des Lasers ein Strahlaufweiter angeordnet. Der Strahlaufweiter kann jedoch auch vor dem/den Strahlumlenkelement(en) bzw. dem Galvanoscanner angeordnet sein. Der Strahlaufweiter umfasst bevorzugt eine Konkavlinse gefolgt von einer Konvexlinse. Auch die umgekehrte Anordnung ist jedoch möglich (der Strahl wird kleiner), was notwendig ist, wenn der Rohstrahl zu groß ist. Auch Strahlaufweiter mit zwei Konvexlinsen sind möglich. Der Strahlaufweiter kann so ausgebildet sein, dass die Aufweitung der Laserstrahlung (bzw. des/der Strahlenbündel(s)) lediglich in der zweiten Raumrichtung, nicht jedoch in der ersten Raumrichtung erfolgt. Zum Erzeugen von hinreichend parallelen Strahlengängen können auch Kollimatoren im Strahlengang eingesetzt werden (bevorzugt vor dem Fokussierelement und vor dem ersten Prisma).

In einer weiteren vorteilhaften Ausgestaltungsvariante umfasst die erfindungsgemäße Vorrichtung ein weiteres, zweites Prisma im Strahlengang. Auch bei diesem Prisma handelt es sich vorzugsweise um ein Biprisma. Dieses zweite Prisma teilt die Laserstrahlung so auf zwei Strahlenbündel auf, dass diese Strahlenbündel bereits voneinander getrennt sind, bevor sie dann schließlich auf das dem zweiten Prisma nachfolgende optische Element (insbesondere das erste Prisma) auftreffen. Die so bereits getrennten Strahlenbündel werden dann wie vorstehend beschrieben durch das erste Prisma im Probenvolumen zur Interferenz gebracht. Das zweite Prisma kann vor dem ersten Prisma und dieses vor dem Fokussierelement angeordnet sein. Ebenso ist es jedoch denkbar, das zweite Prisma vor dem Fokussierelement und dieses wiederum vordem ersten Prisma anzuordnen.

Bei dem eingesetzten Laser kann es sich insbesondere um einen gepulsten Laser (besonders bevorzugt einen gepulsten Faserlaser) handeln, dessen Pulsdauer im Bereich zwischen 0,01 und 500 ns, bevorzugt zwischen 6 und 50 ns liegt. Die Pulswiederholrate des gepulsten Lasers liegt vorteilhafterweise im Kilohertzbereich, bevorzugt zwischen 0,1 und 50 kHz. Laser mit Wellenlängen im Infrarotbereich (z.B. bei 1064 nm) sind ebenso einsetzbar wie Laser im UV-Bereich oder im sichtbaren Bereich (z.B. bei 532 nm).

Im Strahlengang können auch weitere optische Elemente angeordnet sein (bevorzugt vor dem Fokussierelement und vor dem ersten Prisma): Frequenzvervielfacher, akusto-optische Modulatoren, mechanischer Shutter, Strahlhomogenisierer und/oder Polarisatoren. Ein eingesetzter Strahlhomogenisierer ist dabei vorteilhafterweise zur Erzeugung eines flachen Intensitätsprofils (sogenanntes "top flat"-Profil) ausgebildet.

Der Frequenzvervielfacher ist vorzugsweise als erstes optisches Element (bzw. auch nach dem Kollimator) angeordnet und ermöglicht die Halbierung, Drittelung oder Viertelung der Laserwellenlänge. Dies kann die Einkopplung bzw. auch Absorption der Laserstrahlung in bestimmten Materialien erhöhen. Der akusto-optische Modulator oder auch der mechanischer Shutter (vorzugsweise nach dem Kollimator bzw. dem Frequenzvervielfacher angeordnet) ermöglichen die Verwendung einzelner Laserpulse oder ermöglichen es auch, die Anzahl der Laserpulse zu kontrollieren.

Die Verwendung des Polarisators (vorzugsweise nach dem Frequenzvervielfacher angeordnet) ist vorteilhaft für die verbesserte Laserstrahleinkopplung z.B. in Metalle.

In einer besonders vorteilhaften Ausgestaltungsform wird die vorbeschriebene erfindungsgemäße Vorrichtung im Rahmen einer Anordnung zur Interferenzstrukturierung verwendet, die eine ortsfest im Weltkoordinatensystem angeordnete Basis und eine mit der Basis verbundene, mit einem ihrer Enden relativ zur Basis bewegliche kinematische Einheit aufweist. Hierbei kann es sich um einen Industrieroboter handeln, dessen Grundgestell die Basis bildet und dessen kinematische Kette als kinematische Einheit verwendet wird. Am beweglichen Ende der kinematischen Einheit ist dann die erfindungsgemäße Vorrichtung zur Interferenzstrukturierung befestigt (wobei die Vorrichtung relativ zum Endglied der kinematischen Einheit oder Kette vorzugsweise starr ausgebildet ist).

Gegenüber den aus dem Stand der Technik bekannten Vorrichtungen zur Interferenzstrukturierung weist die erfindungsgemäße Vorrichtung eine Reihe wesentlicher Vorteile auf:

Erfindungsgemäß lässt sich der Aufbau eines kompakten optischen Systems zur Erzeugung von ein- oder zweidimensionalen Interferenzmustern für die direkte Strukturierung unterschiedlichster Probenmaterialien bewerkstelligen. Die Erfindung zeichnet sich dabei insbesondere durch eine deutliche Erhöhung der Bearbeitungsgeschwindigkeit bei der Strukturierung von Oberflächen sowie auch durch einen vergleichsweise einfachen Aufbau aus. Auch große Oberflächen lassen sich mit der vorliegenden Erfindung schnell strukturieren.

Besonders vorteilhaft ist hierbei die erfindungsgemäße Variante der galvanometerbasierten Bewegungseinheit: Für eine schnelle Strukturierung von flächigen Proben in zwei Dimensionen wären Tischbewegungen im Bereich von einigen Metern pro Sekunde notwendig (was mechanisch nur schwer erreichbar ist). Durch geeignete Anordnung und Abstände der Strahlumlenkelemente lässt sich jedoch bereits bei geringen Winkeländerungen in der Stellung der Strahlumlenkelemente ausgangsseitig (also im Bereich des Probenvolumens) ein großer Versatz des Interferenzmusters bzw. des Strahlfokus und somit ein schnelles Überstreichen einer hinreichend großen Fläche erzielen. Schnelle Bewegungen großer Massen (Tischmasse) können daher erfindungsgemäß vollständig vermieden werden. Besonders in dieser Ausgestaltungsform sind somit extrem hohe Strukturierungsgeschwindigkeiten gepaart mit sehr schnellen Strahlauslenkungen (und somit hohe Flächenbearbeitungsgeschwindigkeiten) möglich.

Ein besonderer Vorteil ist weiterhin, dass bei kontinuierlich bewegter Probe der Laserstrahl unabhängig von der Probenbewegung auf der Probenoberfläche positioniert werden kann. Somit ist es beispielsweise möglich, eine Probenstelle mehrfach (mit mehreren Laserpulsen) zu bestrahlen, bevor man den Ort der Bestrahlung ändert.

Die vorliegende Erfindung ermöglicht eine sehr variable Anordnung und Ausrichtung der unterschiedlichen optischen Elemente (Prisma, Zylinderlinse, ...) im Laserstrahlengang, so dass eine exakte und reproduzierbare Fokussierung im Probenvolumen möglich ist (so kann die Ausdehnung des Strahlenbündels im Interferenzbereich in der ersten Raumrichtung zwischen 10 und 500 $\mu$m und in der zweiten Raumrichtung zwischen 1 und 500 mm bei gleichzeitiger Erzeugung von hohen Energiedichten im Bereich zwischen 0,1 und 10 J/cm2 betragen). Die Periode der Interferenzmuster kann zwischen 0,1 und 100 $\mu$m eingestellt werden.

Erfindungsgemäß können wahlweise der Laserstrahl oder die Probe (bevorzugt auch beide) bewegt werden. Dies ermöglicht eine simultane Einstrukturierung einer Vielzahl von Linien- oder Punktstrukturen in die Probenoberfläche (mehrere tausend Linien- oder Punktstrukturen gleichzeitig einzubringen ist ohne weiteres möglich).

Im Rahmen der erfindungsgemäßen Vorrichtung lassen sich insbesondere auch Lasersysteme mit hohen Pulsfrequenzen (im Kilohertzbereich) bei gleichzeitig niedriger Pulsenergie einsetzen. Extrem hohe Strukturierungsgeschwindigkeiten sind möglich (so kann ein Quadratmeter Probenoberfläche im Bereich zwischen einigen wenigen Sekunden und ca. einer Minute strukturiert werden). Im Vergleich zu bestehenden Vorrichtungen zur Interferenzstrukturierung kann die Bearbeitungsgeschwindigkeit somit vervielfacht werden.

Eine erfindungsgemäße Vorrichtung kann in sehr kompakter Form realisiert werden; somit ist insbesondere eine Integration der erfindungsgemäßen Vorrichtung in ein Industrierobotersystem möglich.

Mit der erfindungsgemäßen Vorrichtung und dem erfindungsgemäßen Verfahren lassen sich die unterschiedlichsten Materialien und Werkstoffe flächig strukturieren: Tribologische und mechanische Anwendungen der strukturierten Proben sind somit ebenso möglich wie beispielsweise optische oder biologische.

Nachfolgend wird die vorliegende Erfindung anhand mehrerer Ausführungsbeispiele beschrieben. Dabei zeigen:

Fig. 1a/1b eine erste erfindungsgemäße Vorrichtung zur Interferenzstrukturierung,

Fig. 2 eine zweite erfindungsgemäße Vorrichtung auf Basis eines Galvanometerscanners,

Fig. 3 eine dritte erfindungsgemäße Vorrichtung auf Basis eines lediglich eindimensional ablenkenden Galvanometerscanners,

Fig. 4 eine erste erfindungsgemäße Vorrichtung, die zwei Biprismen im Strahlengang verwendet,

Fig. 5 eine zweite erfindungsgemäße Vorrichtung, die zwei Biprismen im Strahlengang verwendet,

Fig. 6a/6b mehrere erfindungsgemäße Vorrichtungen, bei denen die Bewegungseinheit den Probenraum bzw. die darin angeordnete Probe bewegt, sowie die Integration einer erfindungsgemäßen Vorrichtung in einen Industrieroboter,

Fig. 7 eine besonders vorteilhafte Ausgestaltung der Erfindung mit einer zweidimensionalen Galvanometer-Scannereinheit und einem x-y-Tisch zur Bewegung der Probe als Bewegungseinheit,

Fig. 8a/8b mehrere Beispiele für durch erfindungsgemäße Laserstrukturierungen eingebrachte Vertiefungsstrukturen in bearbeiteten Probenoberflächen,

Fig. 9 ein Beispiel für im Rahmen der Erfindung wählbare Laserparameter und die damit erzielten Bearbeitungsgeschwindigkeiten.

Figur 10 ein Beispiel für eine weitere erfindungsgemäße Vorrichtung, bei der das Fokussierelement zweiteilig ausgebildet ist, wobei zwischen den beiden Teilen des Fokussierelementes ein mittels eines Galvanometerantriebs drehbarer Ablenkspiegel als Bewegungseinheit ausgebildet ist.

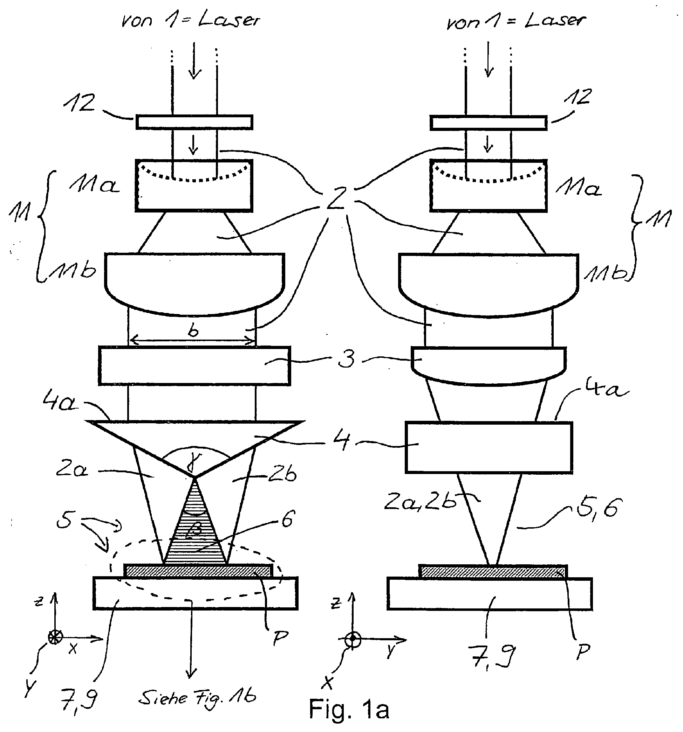

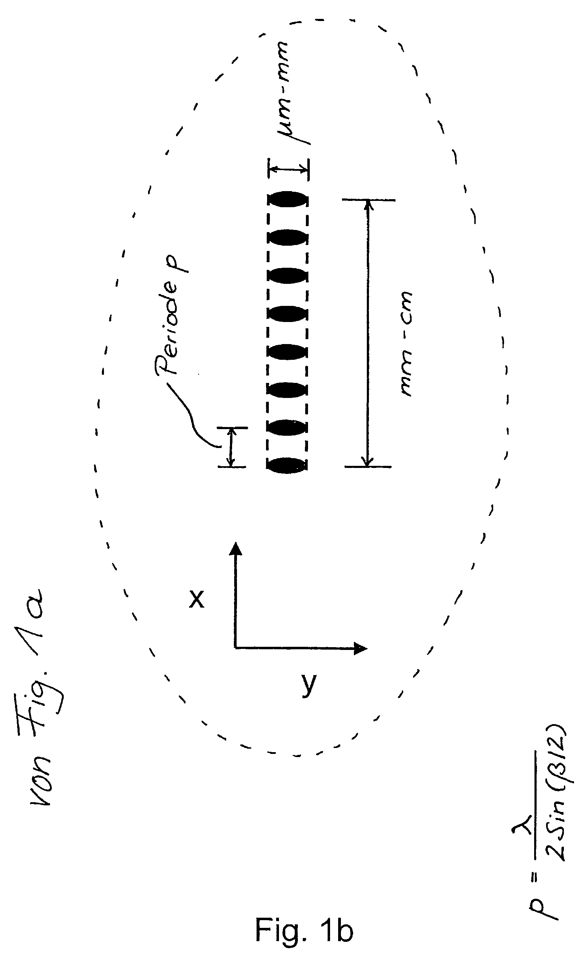

Fig. 1a und 1b zeigen eine erste erfindungsgemäße Vorrichtung, die ortsfest in einem Weltkoordinatensystem (kartesisches Koordinatensystem (x, y, z)) angeordnet ist. Fig. 1a links zeigt eine Aufsicht in Richtung der y-Achse (erste Raumrichtung), Fig. 1a rechts zeigt eine Seitenansicht entgegen der x-Achse (entgegen der zweiten Raumrichtung). Sofern nachfolgend nichts anderes gesagt ist, sind in den Ausführungsbeispielen sämtliche der aufgeführten optischen Elemente im Strahlengang auf der optischen Achse zentriert angeordnet (dies muss aber nicht der Fall sein). Als Laser 1 (hier nicht gezeigt) wird ein Faser-Lasersystem mit einer Pulsdauer im Bereich zwischen 1 Femtosekunde und 1000 Mikrosekunden, mit einer Wellenlänge im Bereich zwischen 150 nm und 13000 nm und mit einer Pulswiederholrate im Bereich zwischen 1 Hz und 200 MHz eingesetzt. Bevorzugt handelt es sich hierbei um ein Faserlaser-System mit 20 ns Pulsdauer, eine Wellenlänge von 1064 nm, und einem Wiederholrate von 5 KHz.

Im Strahlengang des Lasers 1 ist zunächst ein Kollimator 12 zur Erzeugung eines parallelen Laserstrahlenbündels mit einem Durchmesser von 7 mm (doppelte Halbwertsbreite) angeordnet. Im Strahlengang nach dem Kollimator folgt ein - in Strahlrichtung gesehen - zunächst eine Konkavlinse 11a (z.B. mit einer Brennweite von -150 mm) und anschließend eine Konvexlinse 11b (z.B. mit einer Brennweite von 200mm) umfassender Strahlaufweiter 11, mit dem die Strahlbreite in beide Raumrichtungen aufgeweitet wird. Nach dem Strahlaufweiter 11 beträgt der mittlere Strahldurchmesser 14 mm (des nach wie vor parallelen Strahlenbündels 2.

Im Strahlengang zwischen Kollimator 12 und Strahlaufweiter 11 kann auch (hier nicht gezeigt) eine quadratische Lochblende angeordnet sein, mit der der nach dem Kollimator 12 runde Strahlquerschnitt in einen quadratischen Strahlquerschnitt umgesetzt wird.

Das parallele verbreiterte Strahlbündel 2 der Laserstrahlung wird nach dem Strahlaufweiter 11 auf das Fokussierelement 3 in Form einer Zylinderlinse, deren Zylinderachse in x-Richtung angeordnet ist, gerichtet.

Die Brennweite der Zylinderlinse 3 ist so gewählt, dass sie mit dem Abstand der Zylinderlinse 3 von einem Probenvolumen 5 bzw. von einer Probe P (entlang der optischen Achse bzw. der Z-Achse des Aufbaus gesehen) übereinstimmt. Die Laserstrahlung 2 wird somit, in y-Richtung gesehen, genau auf die zu bearbeitende Oberfläche der Probe P fokussiert.

Im Strahlengang nach der Zylinderlinse 3 ist ein Biprisma 4 so angeordnet, dass die seinem stumpfen Winkel γ gegenüberliegende Oberfläche 4a senkrecht zur optischen Achse des Aufbaus steht und dem Fokussierelement 3 zugewandt ist. Der Winkel γ beträgt hier 170°. Die beiden den stumpfen Winkel γ aufspannenden Flächen stehen senkrecht auf der x-z-Ebene. Das Biprisma ist, durch geeignete Wahl des Winkels γ, so ausgebildet und angeordnet, dass das einfallende Laserstrahlenbündel 2 durch das Biprisma in zwei Strahlenbündel 2a und 2b aufgeteilt wird, die - in Richtung der zweiten Raumrichtung x gesehen - unter dem Winkel β überlagert werden. Im Überlappungsbereich der beiden Strahlenbündel 2a, 2b tritt somit Interferenz der Laserstrahlung 2 auf (dieser hier gestrichelt gezeichnete Überlagerungsbereich wird daher nachfolgend auch als Interferenzbereich 6 bezeichnet).

Innerhalb des Interferenzbereichs 6 ist eine ebene Probe P (hier eine dünne Kunststoffplatte) senkrecht zur optischen Achse der gezeigten Vorrichtung innerhalb des Probenvolumens 5 platziert. Im gezeigten Fall kann somit der Bereich, in dem Interferenz der beiden Teilstrahlenbündel 2a und 2b auftritt (Interferenzbereich 6), als Teil des Probenvolumens 5, in dem die Probe P angeordnet ist, aufgefasst werden.

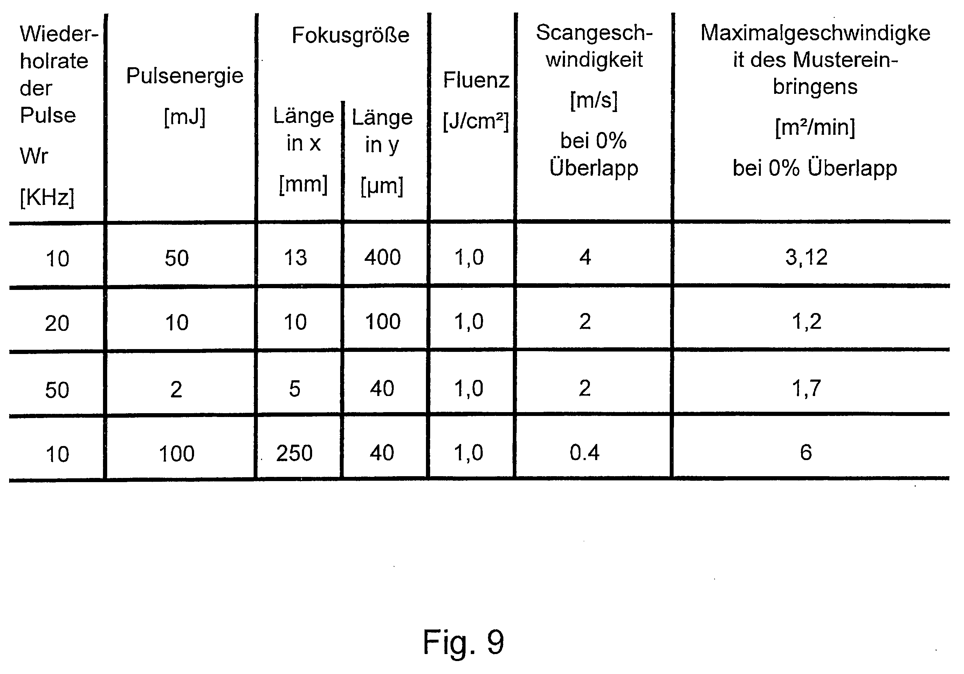

Durch geeignete Wahl der Laserparameter (vgl. vorstehend sowie Fig. 9) und durch Platzieren der Probe P im Brennweitenabstand der Zylinderlinse 3 kann somit in den Intensitätsmaxima der Interferenz eine lokale Energiedichte an der Probenoberfläche erzeugt werden, die ausreicht, Material P lokal zu verdampfen und somit, entsprechend dem Intensitätsmuster, eine Tiefenstruktur in die Plattenoberfläche P einzubringen.

Aus dem Brechungsgesetz folgt

$$n4 \times \sin((180-\gamma)/2) = nLuft \times \sin(\beta)$$

mit nLuft = 1 (Brechungsindex von Luft), n4 = Brechungsindex des verwendeten Glases des Biprismas 4 (hier: n = 1,45 für ein Quarzglas-Biprisma) und β (hier: 7,2°) und γ (hier 170°) den vorbeschriebenen Winkeln. Für die Periode p der in die Probenoberfläche P eingebrannten Interferenzstrukturen ergibt sich (vgl. Fig. 1b) im vorliegenden Fall gemäß

$$p = \frac{\lambda}{2 \times \sin(\beta/2)}$$

ein Wert von 13,5 μm (Bei einer Wellenlänge von 1064 nm). Die sich aufgrund der Fokussierung mit dem Element 3 ergebende Ausdehnung der Interferenzstruktur in Richtung der ersten Raumrichtung γ beträgt hier 50 μm, die durch die mittlere Strahlbreite b (nach der Strahlaufweitung) in x-Richtung und den stumpfen Winkel γ des Biprismas 4 bedingte Ausdehnung der Interferenzstruktur in Richtung der zweiten Raumrichtung x beträgt hier 7 mm. Die Parameter b, γ, β und Brennwerte der Zylinderlinse 3 sowie die Abstände der im Strahlengang verwendeten optischen Elemente sind so eingestellt, dass genau im Fokus der Linse 3 die maximale Ausdehnung des Interferenzbereiches 6 in x-Richtung auftritt.

Durch entsprechende Variation der Brennweite der Zylinderlinse 3, des Winkels γ und/oder der Strahlbreite b lässt sich die Ausdehnung der die Probenoberfläche P strukturierenden Interferenzstruktur in y-Richtung ohne weiteres im Bereich einiger Mikrometer bis einiger Millimeter und in x-Richtung ohne weiteres im Bereich einiger Millimeter bis einiger Zentimeter variieren. (Je höher die Strahlbreite b ist, desto mehr einzelne Interferenzmaxima weist die Interferenzstruktur bei gleicher Periode p auf: Mit zunehmender Breite b steigt somit die Ausdehnung der Interferenzstruktur in x-Richtung.)

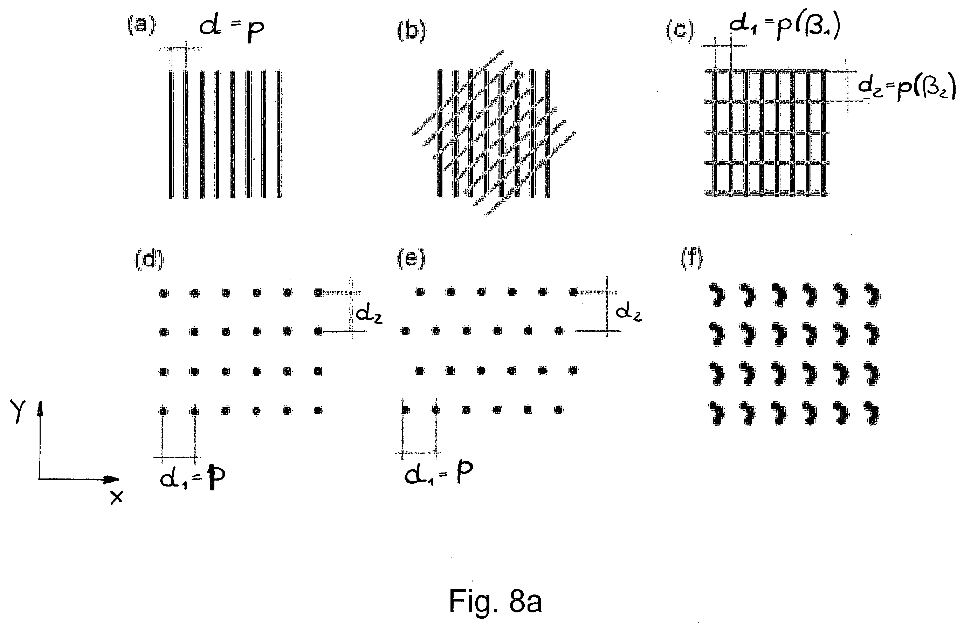

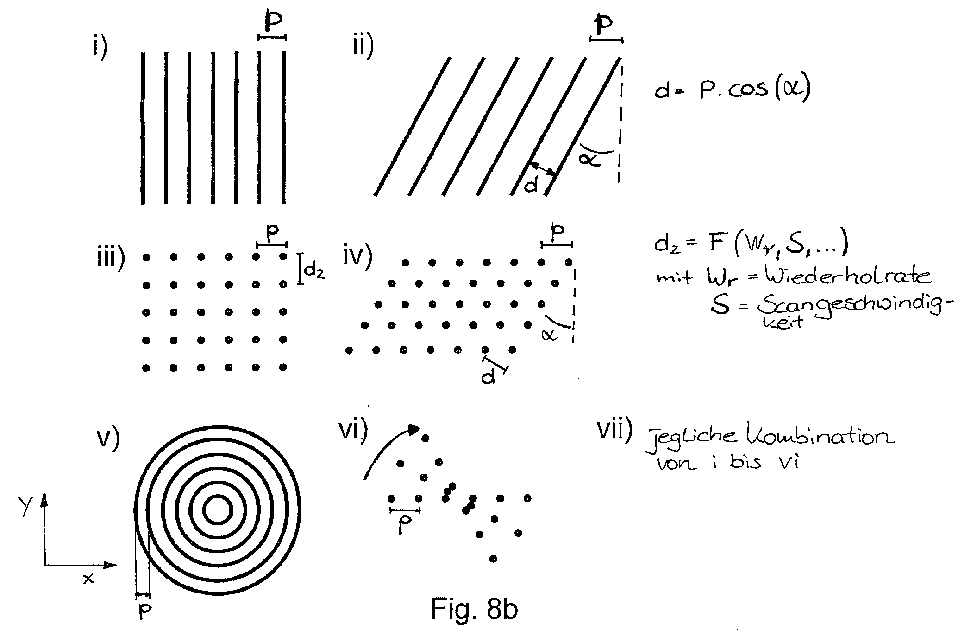

Wesentlich für die vorliegende Erfindung ist nun das Vorsehen einer Bewegungseinheit 7, die im gezeigten Ausführungsbeispiel als x-y-Verschiebetisch (auf dem die Probe P fixiert ist und dessen Tischfläche parallel zur x-y-Ebene angeordnet ist) ausgebildet ist. Dieser Tisch ist hier mit dem Bezugszeichen 9 bezeichnet und im Probenvolumen 5 sowie im Interferenzbereich 6 angeordnet. Alternativ dazu lässt sich selbstverständlich auch z.B. ein Drehtisch, auf dem die Probe P fixiert ist und dessen Rotationsachse in z-Richtung angeordnet ist (also parallel zur optischen Achse der gezeigten Vorrichtung), verwenden. Durch entsprechende Bewegung der Probe P im Probenraum 5 (durch Bewegung des Tisches 9) zwischen den einzelnen aufeinanderfolgenden Laserpulsen lassen sich - in Abhängigkeit von der konkreten Wahl der Vorschub- oder Rotationsgeschwindigkeit des Tisches, der Pulsdauer eines Laserpulses und der Pulswiederholrate der Laserpulse - unterschiedlichste ein- oder zweidimensionale Strukturen in die Oberfläche der Probe P einbringen (vgl. auch Fig. 8a und 8b). Wesentlich ist dabei stets, dass, bedingt durch die Fokussierung 3 in y-Richtung, die Energiedichte in den Maxima des Interferenzmusters 6 ausreichend hoch ist, um das Material der Probe P lokal zu verdampfen.

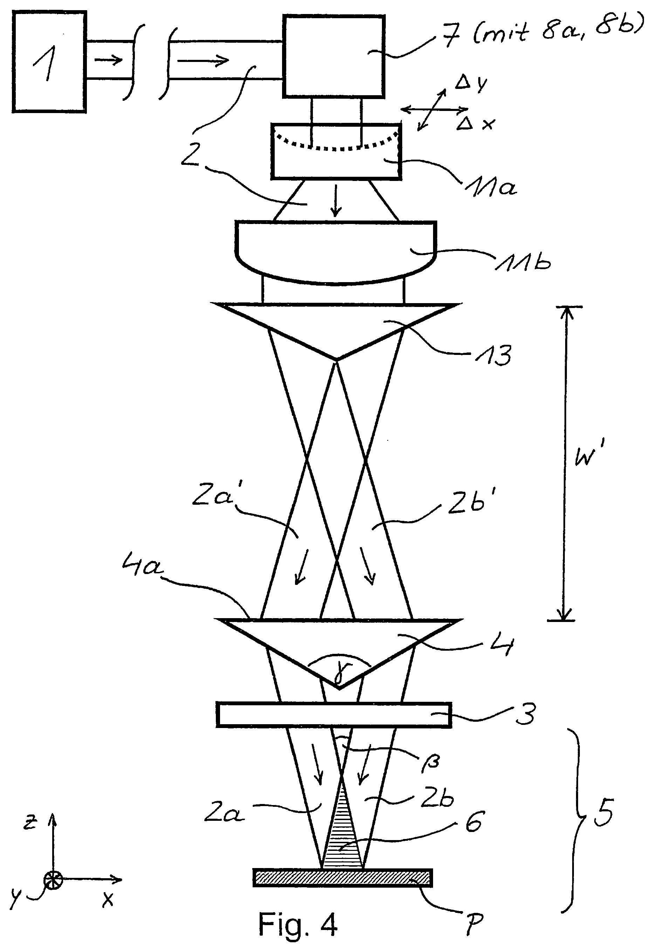

Alternativ zur in Fig. 1a gezeigten Anordnung ist es auch möglich, das Fokussierelement 3 - in Strahlrichtung 2 gesehen - nach dem Biprisma 4 anzuordnen (vgl. auch Fig. 4: Es erfolgt dann zunächst das Zerlegen des aufgeweiteten Strahlenbündels 2 in die beiden Teilstrahlenbündel 2a und 2b, bevor eine Fokussierung dieser beiden Strahlenbündel 2a, 2b in Richtung der ersten Raumrichtung durchgeführt wird).

Durch geeignete Wahl des Abstandes des Faserendes des Lasers 1 vom Fokussierelement 3 (oder dem ersten Prisma 4) und durch Einsatz einer geeignet ausgebildeten Kollimatorlinse ist es auch möglich, eine Strahlaufweitung ohne Verwendung des gezeigten Strahlaufweiters 11 zu erreichen.

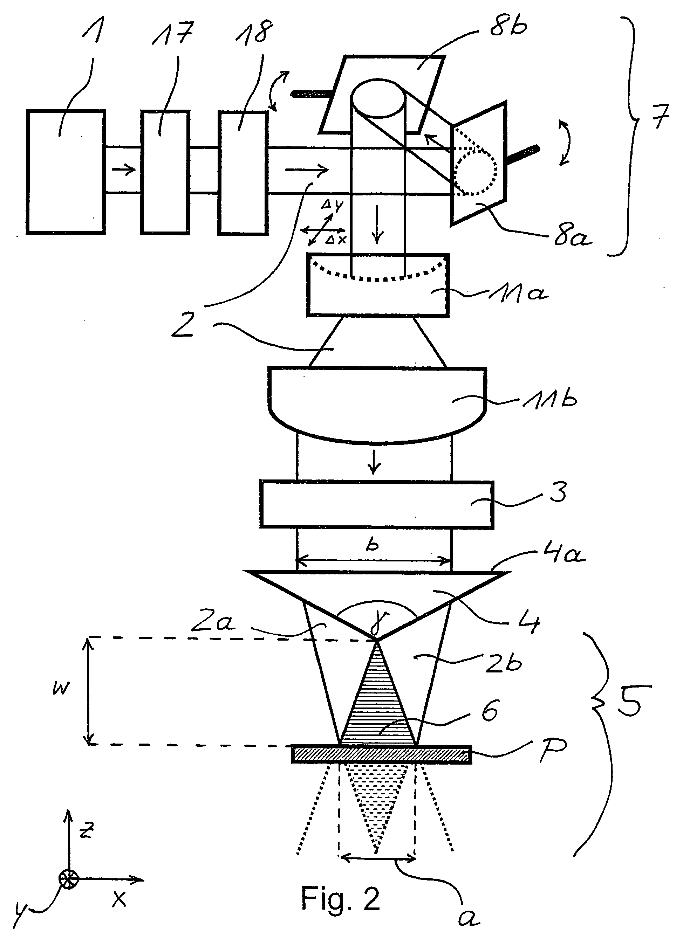

Fig. 2 zeigt ein weiteres Ausführungsbeispiel der vorliegenden Erfindung, bei dem die Bewegungseinheit 7 auf besonders vorteilhafte Weise auf Basis eines Galvanometerscanners realisiert ist. Aufbau und Anordnung dieser Vorrichtung sind grundsätzlich ähnlich wie beim in Fig. 1 gezeigten Ausführungsbeispiel, so dass nachfolgend nur die Unterschiede beschrieben werden.

Im Strahlengang vor dem Strahlaufweiter 11 bzw. dessen erster Linse 11a ist die gezeigte Vorrichtung wie folgt aufgebaut: Als Laser 1 wird ein gepulster Scheibenlaser verwendet, so dass diesem Laser im Strahlengang zunächst ein Shutter 17 folgt, mit dem die einzelnen Laserpulse verwendet werden können. Zur Einstellung eines geeigneten (hier: runden) Strahlquerschnitts folgt eine Blende 18, bevor die Laserstrahlung 2 auf eine zwei bewegliche Spiegel 8a, 8b umfassende Galvanometeranordnung 7 geleitet wird. Die beiden Spiegel 8a, 8b sind auf dem Fachmann bekannte Art und Weise jeweils so um eine Drehachse schwenkbar angeordnet, dass durch Änderung der Winkeleinstellungen der beiden Spiegel 8a, 8b eine Ablenkung des Laserstrahls 2 in Richtung der ersten und/oder der zweiten Raumrichtung bewirkt werden kann. Die Winkeleinstellung und/oder Positionierung der beiden Strahlumlenkelemente 8a, 8b kann mithilfe eines dem Fachmann bekannten, hier nicht gezeigten Galvanometerantriebs erfolgen.

Durch die gezeigte galvanometerscannerbasierte Bewegungseinheit 7 kann somit durch Variation der Spiegelstellungen der Laserstrahl 2 vor seinem Auftreffen auf die erste Linse 11a des Strahlaufweiters 11 um einen beliebigen Winkel relativ zur optischen Achse der gezeigten Vorrichtung (bzw. der Elemente 11a, 11b, 3, 4, 5) bzw. zur z-Richtung gekippt werden. Mit anderen Worten erfolgt durch die Bewegungseinheit 7 im vorliegenden Fall eine sehr schnelle Auslenkung des Laserstrahls 2 in y- und/oder in x-Richtung (die hier durch die Bezeichnung Δy und Δx gekennzeichnet ist). Der Laserstrahl 2 trifft somit je nach momentaner Winkelstellung der beiden Spiegel 8a, 8b in x- und/oder y-Richtung gesehen mit unterschiedlichem/n Einfallswinkel(n) und/oder Einfallsort(en) auf die der Bewegungseinheit 7 zugewandte Oberfläche der Konkavlinse 11a des Strahlaufweiters 11. Dadurch erfolgt auch ausgangsseitig der Elemente 3, 4 eine entsprechende Ablenkung.

Durch die galvanometerscannerbasierte Bewegungseinheit 7 erfolgt somit im gezeigten Fall (bei feststehendem Probenvolumen 5 bzw. feststehender Probe P) eine Auslenkung des Laserstrahls 2 (bzw. der Teilstrahlenbündel 2a, 2b) im Weltkoordinatensystem (x, y, z), so dass durch geeignete Variation der Spiegelstellungen nahezu beliebige Strukturen flächig in die Probe P eingebracht werden können.

Wie auch bei dem in Fig. 1 gezeigten Ausführungsbeispiel wird hier der Arbeitsabstand w (Abstand zwischen der stumpfwinkligen Spitze des Biprismas 4 und der Probe P in Richtung der optischen Achse gesehen) so eingestellt, dass die Probe P genau im maximalen Überlappungsbereich der beiden Teilstrahlenbündel 2a, 2b angeordnet ist: Dies ermöglicht das Ausnutzen der maximalen Ausdehnung a des Interferenzbereichs 6 in x-Richtung zur Strukturierung der Probenoberfläche. (Der Arbeitsabstand w der maximalen Interferenzbereichsausdehnung a von der stumpfen Spitze γ des Prismas 4 kann über die Strahlbreite b in x-Richtung eingestellt werden: Je größer b ist, desto größer wird w.)

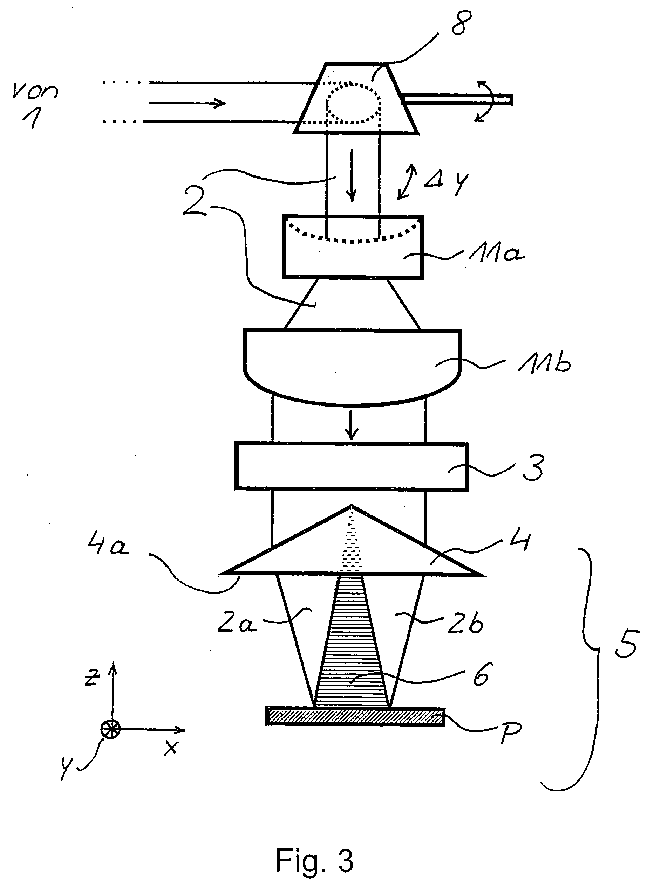

Fig. 3 zeigt ein weiteres Ausführungsbeispiel, dessen Aufbau grundsätzlich mit dem in Fig. 2 gezeigten übereinstimmt, so dass nachfolgend wiederum nur die Unterschiede beschrieben werden: Anstelle einer den Laserstrahl 2 in den beiden Dimensionen x und y auslenkenden, galvanometerscannerbasierten Bewegungseinheit 7 ist hier in der Bewegungseinheit 7 lediglich ein einzelner beweglicher Spiegel 8 vorgesehen, mit dem lediglich eine Auslenkung Δy des Laserstrahls in y-Richtung erfolgen kann. Es sind somit lediglich Einfallsort und Einfallswinkel des Laserstrahls 2 auf der Linse 11a in y-Richtung variierbar. Entsprechend ergibt sich (sofern nicht auch noch ein Verschiebetisch für die Probe P vorgesehen ist) lediglich eine Verschiebung des Interferenzmusters 6 in y-Richtung entlang der Probenoberfläche.

Wie Fig. 3 zeigt, ist zudem auch eine (in Richtung der optischen Achse gesehen) umgekehrte Anordnung des Biprismas 4 im Strahlengang nach dem Fokussierelement 3 möglich: Die der stumpfen Spitze γ abgewandte ebene Fläche 4a ist hier ebenso parallel zur x-y-Ebene angeordnet, jedoch jetzt nicht der Zylinderlinse 3, sondern der Probe P zugewandt. Dies hat jedoch den Nachteil, dass bei zu hoher Intensität der Laserstrahlung durch die bereits innerhalb des Biprismas 4 erfolgende Strahlinterferenz 2a, 2b (s. gestrichelte Linien) eventuell Beschädigungen des Prismas 4 auftreten können. In der Regel ist somit die in Fig. 2 gezeigte Anordnung des Biprismas 4 vorzuziehen.

Fig. 4 zeigt ein weiteres Ausführungsbeispiel, dessen Aufbau grundsätzlich dem des Ausführungsbeispiels aus Fig. 2 entspricht, so dass nachfolgend nur die Unterschiede beschrieben werden. (Die Elemente 1, 17, 18, 8a und 8b sind hier zur Vereinfachung nicht gezeigt; das erste Element im Strahlengang nach dem Strahlauf-weiter 11 ist somit das zweite Biprisma 13, s. nachfolgend.)

Wie Fig. 4 zeigt, können die Elemente 3 und 4 in Richtung der optischen Achse auch so angeordnet werden, dass zuerst die beiden unter dem Einfallswinkel β relativ zueinander auf das Probenvolumen 5 einfallenden bzw. interferierenden 6 Teilstrahlenbündel 2a, 2b erzeugt werden, bevor die Fokussierung in die erste Raumrichtung y mithilfe der Zylinderlinse 3 erfolgt.

Der wesentliche Unterschied zum in Fig. 2 gezeigten Aufbau ist jedoch, dass die mittels der zweidimensionalen Galvanometeranordnung 7, 8a, 8b sowohl in x- als auch in y-Richtung ablenkbare Laserstrahlung 2 auf der Strahlausgangsseite des Strahlaufweiters 11 auf ein weiteres, zweites Prisma 13 gelenkt wird, das zwischen den Elementen 11 und 4 im Strahlengang (und zentriert auf der optischen Achse) angeordnet ist. Auch dieses Biprisma 13 ist mit seiner dem stumpfen Winkel gegenüberliegenden Ebene dem Strahlaufweiter 11 zugewandt, weist also mit seiner Spitze in Richtung der Probe P (ebenso wie das erste Biprisma 4). Mit dem zweiten Biprisma 13 wird die Laserstrahlung 2 so auf zwei Strahlenbündel 2a', 2b' aufgeteilt, dass diese beiden Strahlenbündel (in x-Richtung gesehen) vollständig voneinander getrennt sind, bevor sie auf die dem stumpfen Winkel $\gamma$ des ersten Biprismas gegenüberliegende ebene Fläche 4a auftreffen. Das erste Biprisma 4 ist in diesem Fall so angeordnet, dass die beiden bereits getrennten, unter unterschiedlichen Winkeln einfallenden Teilstrahlenbündel 2a' und 2b' so als Strahlenbündel 2a, 2b auf das Probenvolumen 5 gerichtet werden, dass sie wie vorbeschrieben interferieren 6.

Die in Fig. 4 gezeigte Anordnung mit zwei Biprismen 4, 13 hat den Vorteil, dass der Interferenzbereich 6 in größerer Entfernung vom ersten Biprisma 4 ausgebildet wird, so dass sich ein größerer Arbeitsabstand w (vgl. Fig. 2) ergibt. Der Arbeitsabstand w ist über den Abstand w' der beiden Prismen 4, 13 in Richtung der optischen Achse einstellbar.

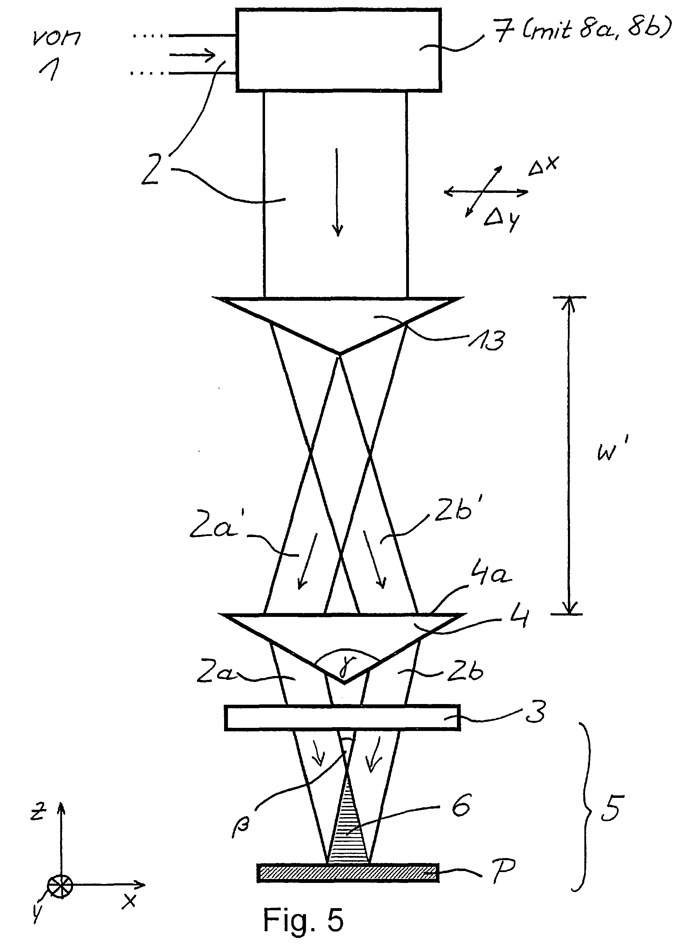

Fig. 5 zeigt ein weiteres Ausführungsbeispiel, dessen Vorrichtung grundsätzlich wie die in Fig. 4 gezeigte Vorrichtung ausgebildet ist, wobei hier jedoch auf den zwischen den Elementen 7 und 13 liegenden Strahlaufweiter 11 verzichtet wurde.

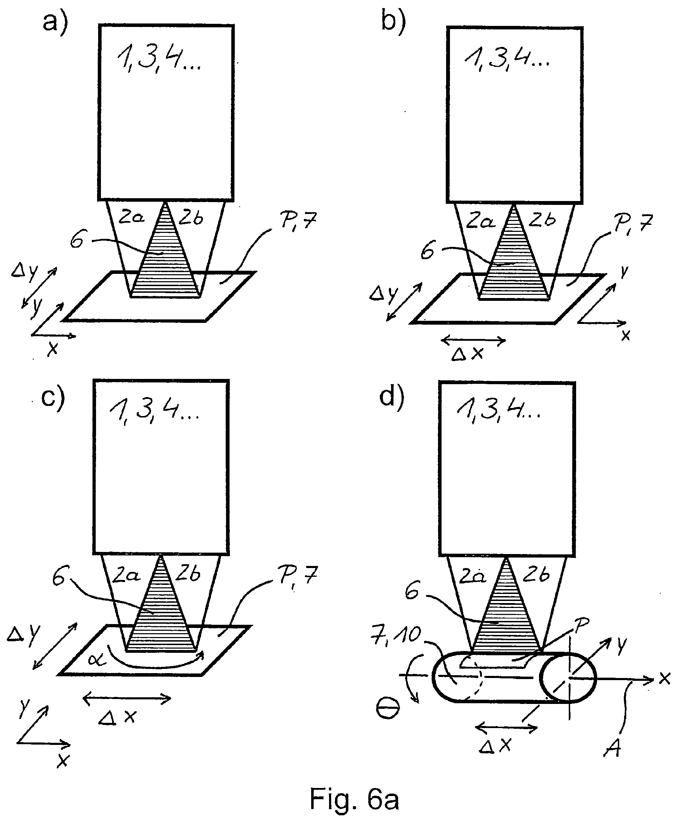

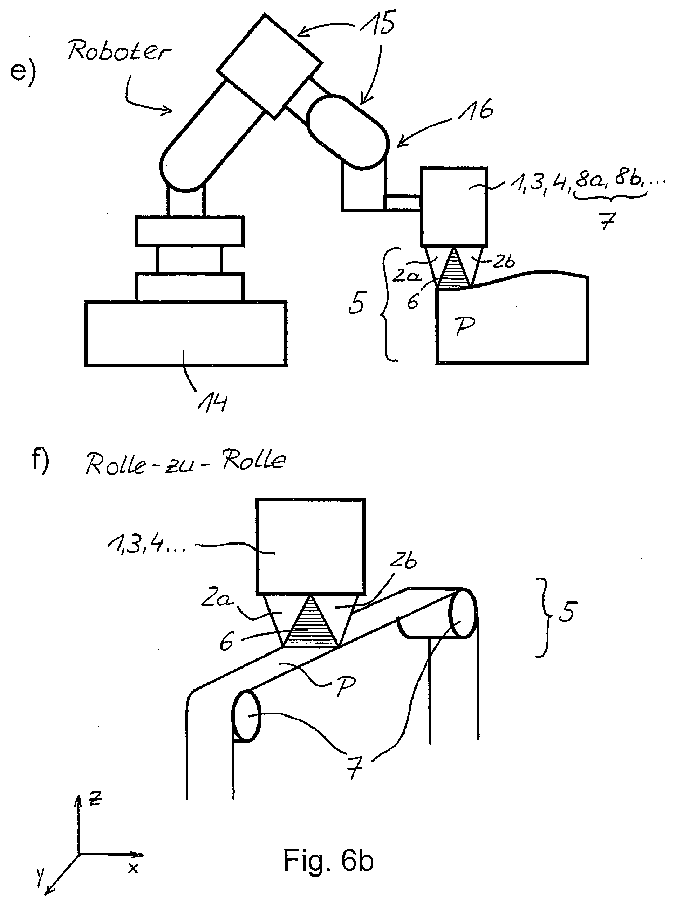

Fig. 6a zeigt schematisch, welche Bewegungseinheiten 7 strahlausgangsseitig des Fokussierelementes 3 und des ersten Prismas 4, also zur Bewegung der Probe und/oder des Probenvolumens 5 in die erste und/oder die zweite Raumrichtung, realisierbar sind. Wie bereits vorbeschrieben, können diese auch mit galvanometerscannerbasierten Bewegungseinheitbauteilen 8a, 8b ... auf der Strahleingangsseite der Elemente 3, 4 kombiniert werden, so dass in besonders vorteilhafter Weise sowohl eine Bewegung des Probenvolumens bzw. der Probe als auch der Laserstrahlung 2 möglich ist. Die Bewegungen des Galvanoscanners bzw. der galvanometerscannerbasierten Bauteile 8a, 8b ... und der Bewegungseinheit(en) auf der Strahlausgangsseite (z.B. x-y-Verschiebetisch) können dabei synchronisiert erfolgen.

Fig. 6a-a) zeigt schematisch das Vorsehen eines Translationstisches 7, mit dem die Probe P lediglich in y-Richtung bewegt werden kann, also lediglich ein- und zweidimensionale Musterstrukturen in der Probenoberfläche einstrukturiert werden können (siehe Fig. 8a-a und 8a-d).

Beim in Fig. 6a-b) skizzierten Fall ist ein Translationstisch als Bewegungseinheit 7 vorgesehen, mit dem die Probe P sowohl in x- als auch in y-Richtung bewegt werden kann, so dass auch zweidimensionale Musterstrukturen erzeugt werden können.

Fig. 6a-c) zeigt das Vorsehen eines Rotationstisches als Bewegungseinheit 7, dessen Rotationsachse senkrecht zur x-y-Ebene steht, mit dem die Probe P somit in Richtung a (siehe Pfeil) um die optische Achse drehbar ist. (Hiermit können beispielsweise die in Fig. 8b-v und 8b-vi) gezeigten Musterstrukturen realisiert werden.)

Fig. 6a-d) zeigt schließlich eine als rotierende Walze 10 ausgebildete Bewegungseinheit 7, wobei die Rotationsachse A dieser Walze 10 parallel zur x-Richtung angeordnet ist, so dass durch Drehung $\Theta$ um die Rotationsachse A die Oberfläche der Walze eine Bewegungskomponente in y- und/oder z-Richtung erhält. Die zu strukturierende Probe P kann auf der Mantelfläche der Walze 10 fixiert werden; sie wird dann bei Rotation der Walze um einen Winkel $\theta$ senkrecht zur x-Richtung strukturiert.

Wie Fig. 6b-f) zeigt, kann die Bewegungseinheit 7 strahlausgangsseitig auch als Rolle-zu-Rolle-Transporteinheit ausgebildet werden. Die Probe P wird dabei flächig auf einem Transportband fixiert, das abschnittsweise parallel zur x-y-Ebene in y-Richtung transportiert wird. Es erfolgt dann eine eindimensionale Strukturierung der Probe P in y-Richtung.

Wie Fig. 6b-e) zeigt, kann erfindungsgemäß auch ein Industrieroboter zur Interferenzstrukturierung realisiert werden. Der Roboter weist ein ortsfest im Weltkoordinatensystem angeordnetes Grundgestell 14 auf, an dem die mehrere Glieder umfassende kinematische Kette 15 des Roboters so befestigt ist, dass das dem Grundgestell abgewandte Ende 16 dieser kinematischen Kette im Raum translatorisch und rotatorisch relativ zum Weltkoordinatensystem bewegt werden kann. An diesem Ende 16 der kinematischen Kette 15 des Roboters kann eine der in den vorbeschriebenen Ausführungsbeispielen dargestellten Vorrichtungen zur Interferenzstrukturierung starr befestigt sein.

Besonders vorteilhaft ist hierbei die Verwendung eines faserbasierten Lasers 1; die Strahlführung erfolgt dann über eine geeignet in der kinematischen Kette ausgebildete Faser.

Die gezeigte Anordnung wird dabei vorteilhafterweise so betrieben, dass die am Ende 16 starr fixierte Vorrichtung zur Interferenzstrukturierung zunächst durch Bewegung der kinematischen Kette 15 wie gewünscht relativ zur zu bearbeitenden Probe P ausgerichtet wird. Probe P und Vorrichtung zur Interferenzstrukturierung stehen dann nach dieser Ausrichtung in genau definierter Position relativ zueinander unbeweglich im Weltkoordinatensystem, so dass anschließend das Koordinatensystem (x, y, z) der Vorrichtung zur Interferenzstrukturierung mit dem Weltkoordinatensystem zusammenfällt. Die Strukturierung der Probe P erfolgt dann wie in den vorhergehenden Ausführungsbeispielen beschrieben.

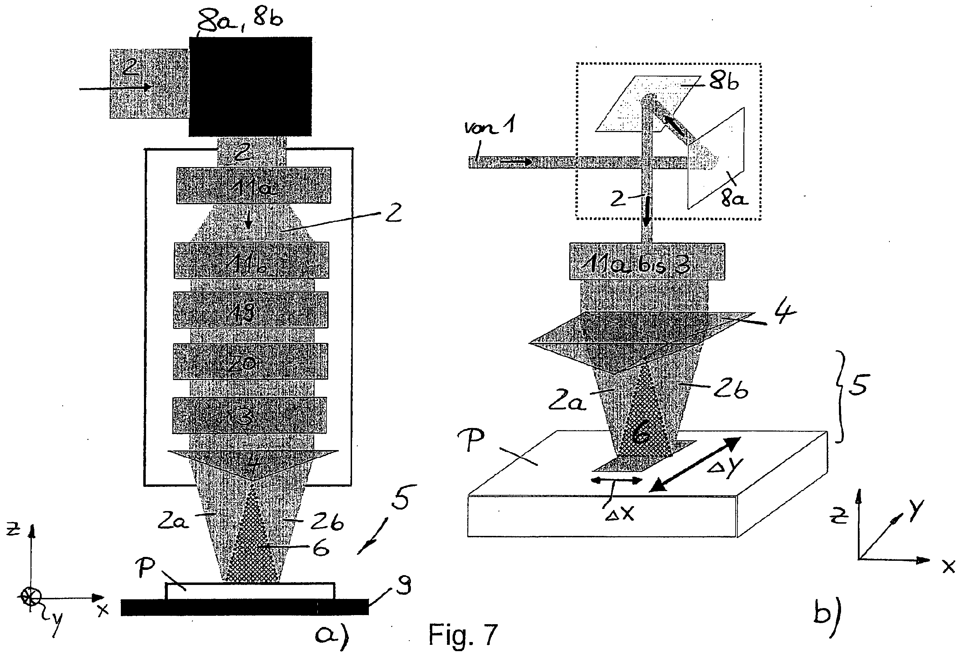

Fig. 7 skizziert schließlich eine besonders vorteilhafte Ausführungsform der vorliegenden Erfindung, bei der die Bewegungseinheit 7 strahleingangsseitig mehrere Strahlumlenkelemente 8a, 8b mit Galvanometerantrieb mit einem strahlausgangsseitig angeordneten Verschiebetisch 9, auf dem die Probe P in x- und in y-Richtung im Probenvolumen bzw. im Interferenzbereich 6 verschiebbar angeordnet ist, verbindet. Der Aufbau entspricht somit grundsätzlich dem in Fig. 2 gezeigten Fall (wobei hier zusätzlich noch der strahlausgangsseitige Verschiebetisch 9 vorhanden ist), so dass nachfolgend lediglich die Unterschiede beschrieben werden.

Im Strahlengang 2 zwischen dem Strahlaufweiter 11a, 11b und der Zylinderlinse 3 ist hier ein zusätzliches Linsensystem 19, 20 angeordnet.

Mit der in Fig. 7 gezeigten Vorrichtung können unterschiedlichste Proben P aus Polymerwerkstoffen, Keramik, Metall oder auch aus Kunststoff interferenzstrukturiert werden.

Fig. 8a zeigt unterschiedliche Interferenzstrukturen (nachfolgend auch als Muster bezeichnet), die durch die vorstehend beschriebenen Vorrichtungen gemäß der Erfindung in unterschiedlichste Materialien bzw. Proben P (Metall, Keramik, Polymere, ...) eingebracht werden können:

Eindimensionale, linienartige Muster mit periodischem Abstand d (entsprechend der Musterperiode p aus Fig. 1b), vgl. (a).

Kreuzartige, eindimensionale Muster, die durch Mehrfachbestrahlungen (nach Drehung der Probe) aus Linienmustern gemäß (a) erreicht werden. Dabei sind beliebige Rotationswinkel (z.B. 30°, 60° oder 90°) der Probe P möglich, vgl. (b).

Kombinierte kreuzartige Muster mit unterschiedlichen Linienabständen, die durch Variation der Wellenlängen λ (beispielsweise auf Basis eines optischparametrischen Oszillators OPO des Lasers 1) und/oder durch Variation des Winkels β erreicht werden können, vgl. (c).

Verschiedene Anordnungen von Vertiefungen (Löchern) mit unterschiedlichen Abständen d1 und d2, wobei d1 oder d2 der Periode p der Interferenzstruktur entspricht, s. (d), (e) und (f). So kann beispielsweise im Fall (d) der Lochabstand d1 in x-Richtung der Periode der Interferenzstruktur p entsprechen (vgl. Fig. 1b), während der Abstand der Strukturlöcher in y-Richtung (also d2) durch Auslenkung des Laserstrahls in y-Richtung über einen Spiegel 8, wie er in Fig. 3 gezeigt ist, eingestellt werden kann (der Abstand d2 wird dabei durch die geometrische Anordnung der einzelnen Elemente, die Bewegungsgeschwindigkeit des Spiegels 8 sowie die Pulswiederholrate der Laserpulse bestimmt).

Fig. 8b zeigt weitere Strukturierungsbeispiele (i) bis (vi), die erfindungsgemäß möglich sind. So erfolgt bei (i) die Einstellung der Periode p der Interferenzstruktur in x-Richtung über den Winkel β (also über die Prismenform bzw. geeignete Wahl des Winkels γ des Prismas), wobei der Laser kontinuierlich betrieben wird und z.B. eine kontinuierliche Verschiebung der Probe P während der Bearbeitung in y-Richtung mithilfe eines Translationstisches erfolgt. Im Fall (ii) erfolgt die Probenverschiebung zusätzlich mit einer x-Komponente (d ist hier der senkrechte Abstand benachbarter Strukturierungslinien; der Winkel α ergibt sich durch das Verhältnis der Tischverschiebungsgeschwindigkeiten in x- und y-Richtung). Die Fälle (iii) und (iv) wurden entsprechend strukturiert, hier allerdings mit gepulstem Faserlaser. (Der Strukturierlochabstand in y-Richtung hängt hierbei von der Wiederholrate wr der Pulse und von der Scangeschwindigkeit s der galvanometerbasierten Ablenkung in y-Richtung sowie von der geometrischen Anordnung ab.) Die Fälle (v) und (vi) skizzieren die Bearbeitung bei Einsatz eines Rotationstisches anstelle eines Translationstisches (vgl. auch Fig. 1a) im Fall der Verwendung von gepulster Laserstrahlung mit unterschiedlichen Rotationsgeschwindigkeiten: (v) sehr langsam, (vi) schneller. Selbstverständlich sind - (vii) - auch Kombinationen der gezeigten Bearbeitungsvarianten möglich.

Die Pulsdauer kann zwischen einer Femtosekunde und 500 Millisekunden betragen, die Lasersysteme können Wellenlängen aus dem UV-, dem VIS- oder IR-Bereich haben (beispielsweise 266, 355, 532 oder 1064 nm). Pulswiederholraten von wenigen Hertz bis hin zu 200 MHz sind denkbar.

Verwendet man einen Faserlaser mit einer Leistung von 500 Watt, einer Pulsdauer von 20 ns, einer Pulswiederholrate von wr = 10 KHz, einer Pulsenergie von 50 mJ und einer Wellenlänge von λ = 1064 nm, so lässt sich bei geeigneter Ausbildung und Anordnung der optischen Elemente im Strahlengang eine Ausdehnung des Interferenzmusters in y-Richtung von 200 μm, eine Ausdehnung in x-Richtung von 10 mm und eine Periode (Abstand benachbarter Intensitätsmaxima) von p = 15 μm erzeugen. Die mit einem Puls strukturierte Fläche beträgt somit ca. 0,02 cm2, was bei 50 mJ Pulsenergie einer Fluenz von 2.5 J/cm2 entspricht. Möchte man, in y-Richtung gesehen, ein lückenloses Aneinandersetzen der (jeweils 200 μm langen) Einzelpulsstrukturen erreichen (also eine effiziente Strukturierung der Probenfläche ohne Überlapp der durch zeitlich unmittelbar aufeinanderfolgende Pulse eingebrachten Strukturen), so ergibt sich die notwendige Ablenkungsgeschwindigkeit in y-Richtung gemäß 200 μm x 10 kHz zu 2 m/s. Eine solche Strukturierungsgeschwindigkeit lässt sich besonders vorteilhaft durch die in Figur 2 und Figur 3 gezeigten, galvanometerbasierten Aufbauten verwirklichen, da in diesem Fall lediglich eine Spiegelbewegung notwendig ist, nicht jedoch die Bewegung größerer Massen wie bei verschiebetischbasierten Bewegungseinheiten.

Figur 9 zeigt entsprechende Beispiele, wobei hier die Ausdehnung der Interferenzstruktur in der x-y-Ebene (Figur 1b) als "Fokusgröße" bezeichnet ist. Die angegebenen Scangeschwindigkeiten der Galvanometersteuerung am Ort der Probe P sind wiederum ohne Überlapp (und bei unmittelbar aneinandergrenzend eingebrachten Vertiefungsstrukturen zeitlich benachbarter Laserpulse) angegeben.

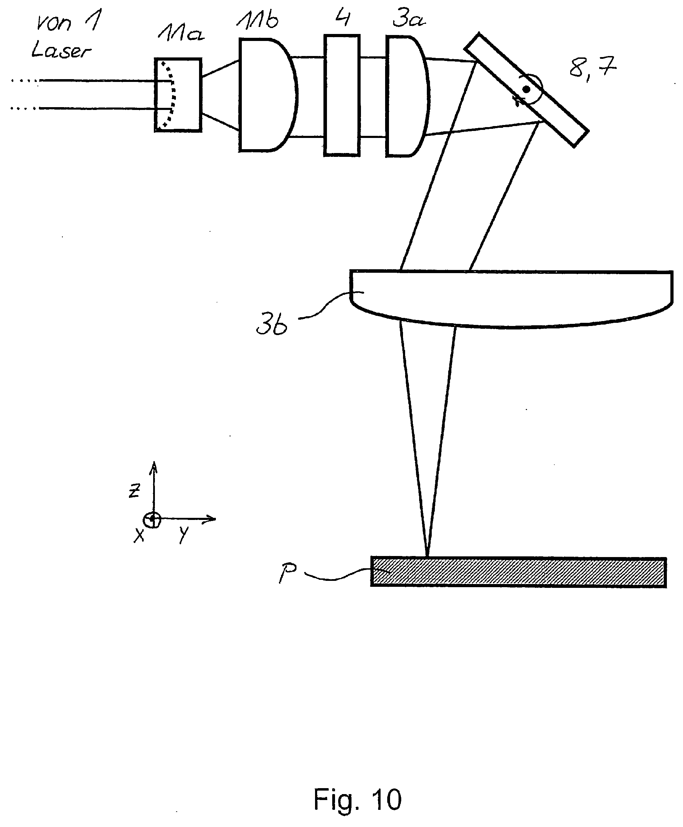

Figur 10 zeigt ein weiteres Ausführungsbeispiel einer erfindungsgemäßen Vorrichtung, bei der das Fokussierelement 3 zweiteilig ausgebildet ist und bei dem die Bewegungseinheit 7 einen einzelnen, mit Hilfe eines Galvanometerantriebs drehbaren Spiegel (Strahlumlenkelement 8) aufweist, der zwischen den beiden Teilen 3a, 3b des Fokussierelementes angeordnet ist.

Im Strahlengang nach dem Laser 1 ist ein zweiteiliger Strahlaufweiter 11a, 11b (der wie der in Figur 1 gezeigte Strahlaufweiter ausgebildet und angeordnet ist) realisiert. Im Strahlengang nach dem Strahlauf-weiter 11a, 11b ist nun zunächst das Biprisma 4 (dessen dem stumpfen Winkel gegenüberliegende Oberfläche 4a - hier nicht gezeigt - zum Laser hin gerichtet ist) angeordnet. Im Strahlengang nach dem Biprisma 4 folgt der erste Teil 3a des Fokussierelementes, der als Zylinderlinse ausgebildet ist. Die Zylinderlinse 3a fokussiert (ähnlich wie in Figur 1a gezeigt) die Laserstrahlung in einer ersten Raumrichtung (diese Angabe der ersten Raumrichtung bezieht sich hier auf die Laserstrahlung nach der Reflexion am Strahlumlenkelement 8 - siehe nachfolgend -, so dass auch hier wie im in Figur 1a gezeigten Fall, bezogen auf die Probenebene, eine Fokussierung in y-Richtung erfolgt, wobei dies vor der Strahlumlenkung durch das Element 8 einer Fokussierung in z-Richtung entspricht).

Im Strahlengang nach dem ersten Teil 3a des Fokussierelementes 3 folgt die Bewegungseinheit 7, die hier als einzelner, schwenkbarer bzw. drehbarer Spiegel 8 ausgebildet ist, dessen Schwenk- bzw. Drehachse in Richtung der zweiten Raumrichtung (x-Richtung) steht. Im Strahlengang nach der Bewegungseinheit folgt der zweite Teil des Fokussierelementes 3, der hier als F-Theta Objektiv ausgebildet ist. Dieses Objektiv 3b weist eine ausreichende Größe und eine Anordnung dergestalt auf, dass der drehbare Spiegel 8 den Laserstrahl über einen großen Winkelbereich auf die der Probe P abgewandte Rückseite des Objektivs 3b richtet und dass das Objektiv 3b über den gesamten so mittels des Spiegels 8 überstrichenen Winkelbereich immer dafür sorgt, dass der Laserstrahl im Probenvolumen auf die dort angeordnete Probe P bzw. auf deren zu strukturierende Oberfläche fokussiert wird (unabhängig von der von der momentanen Winkelstellung des Spiegels abhängigen Wegstrecke des Laserstrahls zwischen Laser und Probe P).

Das Fokussierelement ist somit hier zweiteilig 3a, 3b ausgebildet, wobei sich (im Strahlengang gesehen) zwischen den beiden Teilen die Bewegungseinheit 7 befindet. Der strahlausgangseitig der Bewegungseinheit 7 angeordnete zweite Teil 3b bzw. das F-Theta Objektiv (das als zylindrisches, als telezentrisches oder als zylindrisch-telezentrisches F-Theta Objektiv realisiert sein kann) hält somit den Laserstrahlfokus über den gesamten abscanbaren Bereich (Scanfeld) in ein und derselben Ebene, nämlich der Oberfläche der Probe P.

Ist das F-Theta Objektiv 3b ein zylindrisch oder ein zylindrisch-telezentrisches, so kann es bei geeigneter Einstellung auch die Fokussierung der Laserstrahlung in der ersten Raumrichtung übernehmen. Die Zylinderlinse 3a kann dann weggelassen werden. (Ein F-Theta Objektiv hält den Laserstrahlfokus im gesamten Scanfeld in einer Ebene. Daher werden diese Objektive auch Planfeldoptik genannt. Auch ein telezentrisches F-Theta Objektiv hält den Laserstrahlfokus im gesamten Scanfeld in einer Ebene. Weiterhin hält es den Laserstrahl senkrecht zum Scanfeld.)

Hierbei kann es notwendig sein, die Breite des Strahles auf der Einfallsseite des Objektivs 3b (in y-Richtung) genau zu kontrollieren, damit das Objektiv 3b nicht zerstört wird.

Von Vorteil wäre in dem in Figur 10 gezeigten Aufbau alternativ auch die Nutzung von eindimensionalen Linsen (Konkavlinse 11a und Konkavlinse 11b), das heißt von Linsen, die den Strahlengang (Strahlaufweitung) lediglich in der zweiten Raumrichtung x beeinflussen (hier nicht gezeigt).

**Patentansprüche**

1. Vorrichtung zur Interferenzstrukturierung einer flächigen Probe (P) mit einem Laser (1), einem Probenvolumen (5), in dem die flächige Probe (P) im Interferenzbereich (6) platzierbar ist oder platziert ist, einer Bewegungseinheit (7), mit der das/die Strahlenbündel der Laserstrahlung (2) bewegbar ist/sind, bevorzugt in der ersten, der zweiten oder der ersten und der zweiten Raumrichtung (x, y) bewegbar ist/sind, und/oder mit der eine/die Probe (P) im Probenvolumen (5) bewegbar ist, bevorzugt in die erste, die zweite oder die erste und die zweite Raumrichtung (x, y) bewegbar ist, und **gekennzeichnet durch** ein im Strahlengang des Lasers angeordnetes ein- oder mehrteiliges Fokussierelement (3, 3a, 3b), mit dem die Laserstrahlung (2) in einer ersten Raumrichtung (y) fokussierbar ist, ohne jedoch in die Richtung senkrecht zu dieser ersten Raumrichtung (y) fokussiert zu werden, und ein im Strahlengang des Lasers angeordnetes erstes Prisma (4), insbesondere ein Biprisma, mit dem die Laserstrahlung (2) in einer zweiten, zur ersten Raumrichtung (y) bevorzugt orthogonalen Raumrichtung (x) mit zwei Strahlenbündeln (2a, 2b) so auf das Probenvolumen (5) richtbar ist, dass die beiden Strahlenbündel (2a, 2b) innerhalb des Probenvolumens (5) in einem Interferenzbereich (6) interferieren.

2. Vorrichtung nach dem vorhergehenden Anspruch **dadurch gekennzeichnet, dass** das Fokussierelement (3, 3a, 3b) eine Zylinderlinse, eine Zylinderlinse (3a) mit einem im Strahlengang nach dieser angeordneten F-Theta Objektiv (3b) oder ein zylindrisches F-Theta Objektiv ist, und/oder dass das Fokussierelement (3, 3a, 3b) so ausgebildet ist, dass mit ihm zusätzlich auch der Fokus der Laserstrahlung über einen, bevorzugt den gesamten, mittels der Bewegungseinheit (7) abscanbaren Bereich in genau einer Ebene innerhalb des Probenvolumens (5), bevorzugt auf einer Oberfläche einer/der im Probenvolumen (5) platzierten Probe, haltbar ist.

3.  Vorrichtung nach einem der vorhergehenden Ansprüche,
    ***dadurch gekennzeichnet, dass***
    die Bewegungseinheit (7) mindestens ein, bevorzugt mehrere im Strahlengang des Lasers (1) angeordnete(s) bewegliche(s), insbesondere dreh- und/oder schwenkbare(s), Strahlumlenkelement(e) (8, 8a, 8b), insbesondere Spiegel und/oder Spiegelprisma/men, umfasst, mit dem/denen das/die Strahlenbündel der Laserstrahlung (2) in der ersten, der zweiten oder der ersten und der zweiten Raumrichtung (x, y) bewegbar ist/sind.

4.  Vorrichtung nach dem vorhergehenden Anspruch,
    ***dadurch gekennzeichnet, dass***
    das/die Strahlumlenkelement(e) mittels eines Galvanometerantriebs positionierbar und/oder winkelverstellbar ist/sind
    und/oder
    dass das/die Strahlumlenkelement(e) im Strahlengang nach dem Laser (1), vor dem Fokussierelement (3) und vor dem ersten Prisma (4) angeordnet ist/sind und so ansteuerbar ist/sind, dass der Einfallswinkel und/oder der Einfallsort des auf das dem/den Strahlumlenkelement(en) im Strahlengang nachfolgende optische Element, insbesondere das Fokussierelement (3) oder das erste Prisma (4), einfallenden Strahlenbündels (2) variierbar ist/sind.

5.  Vorrichtung nach einem der vorhergehenden Ansprüche,
    ***dadurch gekennzeichnet, dass***
    die Bewegungseinheit (7) eine bewegliche Verschiebeeinheit (9), insbesondere einen Verschiebetisch, einen Drehtisch und/oder eine Rolle-zu-Rolle-Transporteinheit, aufweist, mit der/dem die Probe (P) im Probenvolumen (5) in der Ebene (x, y) der ersten und zweiten Raumrichtung translatorisch und/oder rotatorisch verschiebbar ist,
    wobei die Verschiebeeinheit (9) bevorzugt so ausgebildet ist, dass mit ihr die Probe (P) im Probenvolumen (5) zusätzlich auch senkrecht zu dieser Ebene (x, y) verschiebbar ist.

6.  Vorrichtung nach einem der vorhergehenden Ansprüche,
    ***dadurch gekennzeichnet, dass***
    die Bewegungseinheit (7) eine drehbare Rotationseinheit (10), insbesondere eine zylindrische Walze, aufweist, mit der die Probe (P) im Probenvolumen (5) um eine bevorzugt in der Ebene (x, y) der ersten und zweiten Raumrichtung liegende Achse (A) drehbar ist.

7.  Vorrichtung nach einem der vorhergehenden Ansprüche,
    ***dadurch gekennzeichnet, dass***
    das Fokussierelement (3) im Strahlengang des Lasers vor dem ersten Prisma (4) angeordnet ist
    oder
    dass das Fokussierelement (3) im Strahlengang des Lasers nach dem ersten Prisma (4) angeordnet ist.

8.  Vorrichtung nach einem der vorhergehenden Ansprüche,
    ***dadurch gekennzeichnet, dass***
    im Strahlengang des Lasers (1), insbesondere vor dem Fokussierelement (3), vor dem ersten Prisma (4) und/oder vor dem/den Strahlumlenkelement(en) (8, 8a, 8b), ein Strahlaufweiter (11), der bevorzugt - in Strahlrichtung gesehen - eine Konkavlinse (11a) gefolgt von einer Konvexlinse (11b) oder zwei Konvexlinsen umfasst, angeordnet ist, mit dem bevorzugt die Ausdehnung eines/des/der Strahlenbündel(s) der Laserstrahlung lediglich in der zweiten Raumrichtung (x), nicht jedoch in der ersten Raumrichtung (y), aufweitbar ist, bevorzugt parallel aufweitbar ist,
    und/oder
    dass im Strahlengang des Lasers (1), insbesondere vor dem Fokussierelement (3), vor dem ersten Prisma (4) und ggf. auch vor dem Strahlaufweiter (11) und/oder vor dem/den Strahlumlenkelement(en) (8, 8a, 8b), ein Kollimator (12) angeordnet ist.

9.  Vorrichtung nach einem der vorhergehenden Ansprüche,
    ***dadurch gekennzeichnet, dass***
    im Strahlengang des Lasers (1) vor dem ersten Prisma (4) ein weiteres, zweites Prisma (13), insbesondere ein zweites Biprisma, angeordnet ist, mit dem die Laserstrahlung (2) so auf zwei Strahlenbündel (2a', 2b') aufteilbar ist, dass diese Strahlenbündel zumindest teilweise, bevorzugt vollständig getrennt voneinander sind, bevor sie auf das erste Prisma (4) auftreffen und von letzterem im Probenvolumen (5) zur Interferenz bringbar sind.

10. Vorrichtung nach dem vorhergehenden Anspruch,
    ***dadurch gekennzeichnet, dass***
    im Strahlengang des Lasers das zweite Prisma (13) vor dem ersten Prisma (4) und dieses vor dem Fokussierelement (3) angeordnet ist
    oder
    dass im Strahlengang des Lasers das zweite Prisma (13) vor dem Fokussierelement (3) und dieses vor dem ersten Prisma (4) angeordnet ist.

11. Vorrichtung nach einem der vorhergehenden Ansprüche,
***dadurch gekennzeichnet, dass***
der Laser (1)

• ein gepulster Laser, insbesondere ein gepulster Faserlaser, ist,
• Pulse mit einer Pulsdauer von größer gleich 0,01 ns und/oder kleiner gleich 1000 ns, bevorzugt größer gleich 6 ns und/oder kleiner gleich 100 ns, erzeugt,
• Pulse mit einer Pulswiederholrate von größer gleich 1 Hz und/oder kleiner gleich 100 MHz, bevorzugt größer gleich 1 kHz und/oder kleiner gleich 50 kHz, erzeugt,

und/oder

• eine Wellenlänge im IR-Bereich, im UV-Bereich oder im sichtbaren Bereich aufweist, bevorzugt von 355 nm bis 1064 nm.

**12.** Vorrichtung nach einem der vorhergehenden Ansprüche,
***dadurch gekennzeichnet, dass***
im Strahlengang des Lasers (1) und bevorzugt vor dem Fokussierelement (3) und dem ersten Prisma (4) eines oder mehrere der folgenden Elemente angeordnet ist/sind:

• ein Frequenzvervielfacher,
• ein Akusto-Optischer-Modulator,
• ein mechanischer Shutter,
• ein zum Erzeugen eines über den Strahlquerschnitt im wesentlichen konstanten Intensitätsprofils ausgebildeter Strahlhomogenisierer,

und/oder

• ein Polarisator.

**13.** Anordnung zur Interferenzstrukturierung, insbesondere Industrieroboter zur Interferenzstrukturierung, mit
einer ortsfest im Weltkoordinatensystem angeordneten Basis (14),
insbesondere einem Grundgestell des Industrieroboters, und
einer mit der Basis (14) verbundenen, mit einem ihrer Enden (16) relativ zur Basis (14) beweglichen kinematischen Einheit (15), insbesondere der kinematischen Kette des Industrieroboters,
wobei am beweglichen Ende (16) der kinematischen Einheit eine Vorrichtung nach einem der vorhergehenden Ansprüche fixiert ist.

**14.** Verfahren zur Interferenzstrukturierung einer flächigen Probe (P),
***dadurch gekennzeichnet, dass***

das Strukturieren der Probe (P) durch Einsatz einer Vorrichtung oder
einer Anordnung nach einem der vorhergehenden Ansprüche erfolgt.

**Claims**

**1.** An apparatus for the interference structuring of a planar sample (P) comprising
a laser (1);
a single-part or multipart focusing element (3, 3a, 3b) which is arranged in the beam path of the laser and with which the laser radiation (2) can be focused in a first spatial direction (y);
a first prism (4), in particular a biprism, which is arranged in the beam path of the laser and with which the laser radiation (2) in a second spatial direction (x) preferably orthogonal to the first spatial direction and having two beams (2a, 2b) can be directed onto a sample volume (5) such that the two beams (2a, 2b) interfere within the sample volume (5) in an interference region (6);
the sample volume (5) in which the planar sample (P) can be positioned or is positioned in the interference region (6); and
a movement unit (7) with which the beam(s) of the laser radiation (2) can be moved, can preferably be moved in the first spatial direction, in the second spatial direction or in the first and second spatial directions (x, y) and/or with which a/the sample (P) can be moved in the sample volume (5), can preferably be moved in the first spatial direction, in the second spatial direction or in the first and second spatial directions (x, y).

**2.** An apparatus in accordance with the preceding claim
***characterized in that***
the focusing element (3, 3a, 3b) is a cylindrical lens, a cylindrical lens (3a) having an F-theta objective (3b) arranged after it in the beam path or is a cylindrical F-theta objective;
and/or
**in that** the focusing element (3, 3a, 3b) is configured such that the focus of the laser radiation can additionally also be held by it over a region scannable by means of the movement unit (7), preferably over the total region scannable by means of the movement unit (7), in exactly one plane within the sample volume (5), preferably on a surface of a/the sample positioned in the sample volume (5).

**3.** An apparatus in accordance with one of the preceding claims,
***characterized in that***
the movement unit (7) comprises at least one, preferably a plurality of movable beam deflection element(s) (8, 8a, 8b), in particular mirror(s) and/or reflective prism(s), which are arranged in the beam path of the laser (1), which are in particular rotatable and/or pivotable and with which the beam(s) of the laser radiation (2) can be moved in the first spatial direction, in the second spatial direction or in the first and second spatial directions (x, y).

4. An apparatus in accordance with the preceding claim,
*characterized in that*
the beam deflection element(s) can be positioned and/or angle-adjusted by means of a galvanometer drive;
and/or
**in that** the beam deflection element(s) is/are arranged after the laser (1), before the focusing element (3) and before the first prism (4) in the beam path and can be controlled such that the angle of incidence and/or the position of incidence of the beam path (2) of the optical element, in particular the focusing element (3) or the first prism (4), following the beam deflection element(s) in the beam path can be varied.

5. An apparatus in accordance with one of the preceding claims,
*characterized in that*
the movement unit (7) has a movable displacement unit (9), in particular a displacement table, a rotating table and/or a roller-to-roller transport unit with which the sample (P) can be displaced in translation and/or in rotation in the sample volume (5) in the plane (x, y) of the first and second spatial directions,
wherein the displacement unit (9) is preferably configured so that the sample (P) in the sample volume (5) can also additionally be displaced by it perpendicular to this plane (x, y).

6. An apparatus in accordance with one of the preceding claims,
*characterized in that*
the movement unit (7) has a rotatable rotation unit (10), in particular a cylindrical roll, with which the sample (P) can be rotated in the sample volume (5) about an axis (A) preferably lying in the plane (x, y) of the first and second spatial directions.

7. An apparatus in accordance with one of the preceding claims,
*characterized in that*
the focusing element (3) is arranged before the first prim (4) in the beam path of the laser;
or
the focusing element (3) is arranged after the first prim (4) in the beam path of the laser.

8. An apparatus in accordance with one of the preceding claims,

*characterized in that*
a beam expander (11) is arranged in the beam path of the laser (1), in particular before the focusing element (3), before the first prism (4) and/or before the beam deflection element(s) (8, 8a, 8b), said beam expander preferably comprising - viewed in the beam direction - a concave lens (11a) followed by a convex lens (11b) or by two convex lenses and with which beam expander the extent of a/the beam(s) of the laser radiation can preferably be expanded only in the second spatial direction (x), but not in the first spatial direction (y) and is preferably expandable in parallel;
and/or
**in that** a collimator (12) is arranged in the beam path (1), in particular before the focusing element (3), before the first prism (4) and optionally also before the beam expander (11) and/or before the beam deflection element(s) (8, 8a, 8b).

9. An apparatus in accordance with one of the preceding claims,
*characterized in that*
a further second prism (13), in particular a second biprism, is arranged before the first prism (4) in the beam path of the laser (1), with which second prism the laser radiation (2) can be split into two beams (2a', 2b') such that these beams are at least partially, preferably completely, separated from one another before they are incident on the first prism (4) and can be brought by the latter to interference in the sample volume (5).

10. An apparatus in accordance with the preceding claim,
*characterized in that*
the second prism (13) is arranged before the first prism (4) and the latter is arranged before the focusing element (3) in the beam path of the laser;
or
**in that** the second prism (13) is arranged before the focusing element (3) and the latter is arranged before the first prism (4) in the beam path of the laser.

11. An apparatus in accordance with one of the preceding claims,
*characterized in that*
the laser (1)

    • is a pulsed laser, in particular a pulsed fiber laser;
    • generates pulses having a pulse duration of larger than or equal to 0.01 ns and/or less than or equal to 1000 ns, preferably larger than or equal to 6 ns and/or less than or equal to 100 ns;
    • generates pulses having a pulse repetition rate of larger than or equal to 1 Hz and/or less than or equal to 100 MHz, preferably larger or equal to 1 kHz and/or less than or equal to 50 kHz;

and/or

• has a wavelength in the IR range, in the UV range or in the visible range, preferably from 355 nm to 1064 nm.

12. An apparatus in accordance with one of the preceding claims,
*characterized in that*
one or more of the following elements are arranged in the beam path of the laser (1) and preferably before the focusing element (3) and the first prism (4):

• a frequency multiplier;
• an acousto-optical modulator;
• a mechanical shutter;
• a beam homogenizer configured for producing an intensity profile substantially constant over the beam cross-section;

and/or

• a polarizer.

13. An arrangement for the interference structuring, in particular an industry robot for interference structuring, comprising
a base (14), in particular a base frame of the industry robot, arranged at a fixed position in the global coordinate system; and
a kinematic unit (15), in particular the kinematic chain of the industry robot, connected to the base (14) and movable with one of its ends (16) relative to the base (14),
wherein an apparatus in accordance with one of the preceding claims is fixed at the movable end (16) of the kinematic unit.

14. A method for the interference structuring of a planar sample (P),
*characterized in that*
the structuring of the sample (P) takes place by use of an apparatus or of an arrangement in accordance with one of the preceding claims.

**Revendications**

1. Dispositif de structuration d'interférences d'une sonde plate (P) avec un laser (1), un volume de sonde (5), dans lequel la sonde plate (P) peut être placée ou est placée dans la zone d'interférences (6), une unité de mouvement (7), avec laquelle le(s) faisceau(x) du rayon laser (2) est/sont mobile(s), de préférence dans la première, la deuxième ou la première et la deuxième direction spatiale (x, y) et/ou avec laquelle une/la sonde (P) est mobile dans le volume de sonde (5), de préférence dans la première, la deuxième ou la première et la deuxième direction spatiale (x, y), et **caractérisé par** un élément de focalisation (3, 3a, 3b), constitué d'une ou plusieurs parties, disposé dans le trajet optique du laser, avec lequel le rayon laser (2) peut être focalisé dans une première direction spatiale (y) sans être focalisé dans la direction perpendiculaire à cette première direction spatiale (y) et un premier prisme (4) disposé dans le trajet optique du laser, plus particulièrement un biprisme, avec lequel le rayon laser (2) peut être orienté dans une deuxième direction spatiale (x), de préférence perpendiculaire à la première direction spatiale (y), avec deux faisceaux (2a, 2b) vers le volume de sonde (5) de façon à ce que les faisceaux (2a, 2b) interfèrent à l'intérieur du volume de sonde (5) dans une zone d'interférences (6).

2. Dispositif selon la revendication précédente,
**caractérisé en ce que**
l'élément de focalisation (3, 3a, 3b) est une lentille cylindrique, une lentille cylindrique (3a), avec un objectif F-Theta (3b) disposé dans le trajet optique après celle-ci ou un objectif F-Theta,
et/ou
**en ce que** l'élément de focalisation (3, 3a, 3b) est conçu de façon à ce que, avec celui-ci, la focalisation du rayon laser peut également être maintenu sur une zone, de préférence toute la zone, balayable au moyen de l'unité de mouvement (7) dans au moins un plan à l'intérieur du volume de sonde (5), de préférence sur une surface d'une/de la sonde placée dans le volume de sonde (5).

3. Dispositif selon l'une des revendications précédentes,
**caractérisé en ce que**
l'unité de mouvement (7) comprend au moins un, de préférence plusieurs éléments de déviation de rayons (8, 8a, 8b) mobiles disposés dans le trajet optique du laser (1), plus particulièrement pivotants, plus particulièrement des miroirs et/ou des prismes miroirs, avec lesquels le(s) faisceau(x) du rayon laser (2) est/sont mobile(s) dans la première, la deuxième ou la première et la deuxième direction spatiale (x, y).

4. Dispositif selon la revendication précédente,
**caractérisé en ce que**
l'élément ou les éléments de déviation de rayons est/sont positionnable(s) et/ou réglable(s) d'un point de vue angulaire au moyen d'un entraînement à galvanomètre. et/ou
**en ce que** l'élément ou les éléments de déviation de rayons est/sont disposé(s) dans le trajet optique après le laser (1), avant l'élément de focalisation (3) et avant le premier prisme (4) et est/sont contrôlable(s) de façon à ce que l'angle d'incidence et/ou le lieu d'incidence du faisceau (2) arrivant sur l'élément optique suivant l'élément ou les éléments de déviation de rayons dans le trajet optique, plus particulièrement l'élément de focalisation (3) ou le premier prisme (4) soit/soient variable(s).

5. Dispositif selon l'une des revendications précédentes,
**caractérisé en ce que**
l'unité de mouvement (7) comprend une unité coulissante mobile (9), plus particulièrement une table coulissante, une table rotative et/ou une unité de transport rouleau-à-rouleau, avec laquelle la sonde (P) peut être coulissée en translation et/ou de manière rotative dans le volume de sonde (5) dans le plan (x, y) de la première et la deuxième direction spatiale,
l'unité de mouvement (9) étant de préférence conçue de façon à ce que celle-ci permette de faire coulisser la sonde (P) dans le volume de sonde (5) également perpendiculairement à ce plan (x, y).

6. Dispositif selon l'une des revendications précédentes,
**caractérisé en ce que**
l'unité de mouvement (7) comprend une unité de rotation (10) rotative, plus particulièrement un rouleau cylindrique, avec laquelle la sonde (P) est rotative dans le volume de sonde (5) autour d'un axe (A) se trouvant de préférence dans le plan (x, y) de la première et de la deuxième direction spatiale.

7. Dispositif selon l'une des revendications précédentes,
**caractérisé en ce que**
l'élément de focalisation (3) est disposé dans le trajet optique du laser avant le premier prisme (4)
ou
**en ce que** l'élément de focalisation (3) est disposé dans le trajet optique du laser après le premier prisme (4).

8. Dispositif selon l'une des revendications précédentes,
**caractérisé en ce que**
dans le trajet optique du laser (1), plus particulièrement avant l'élément de focalisation (3), avant le premier prisme (4) et/ou avant l'élément ou les éléments de déviation de rayons (8, 8a, 8b), se trouve un élargisseur de faisceau (11), qui comprend de préférence, vu dans la direction du faisceau, une lentille concave (11a) suivie d'une lentille convexe (11 b) ou deux lentilles convexes, avec lequel de préférence l'extension d'un/du/des faisceau(x) du rayon laser peut être élargi uniquement dans la deuxième direction spatiale (x) mais pas dans la première direction spatiale (y), de préférence de manière parallèle,

et/ou
**en ce que**, dans le trajet optique du laser (1), plus particulièrement avant l'élément de focalisation (3), avant le premier prisme (4) et, le cas échéant également avant l'élargisseur de faisceau (11) et/ou avant l'élément ou les éléments de déviation de rayons (8, 8a, 8b), se trouve un collimateur (12).

9. Dispositif selon l'une des revendications précédentes,
**caractérisé en ce que**
dans le trajet optique du laser (1), avant le premier prisme (4), se trouve un deuxième prisme (13), plus particulièrement un deuxième biprisme, avec lequel le rayon laser (2) peut être divisé en deux faisceaux (2a', 2b') de façon à ce que ces faisceaux soient séparés l'un de l'autre au moins partiellement, de préférence entièrement, avant qu'ils n'arrivent sur le premier prisme (4) et soient amenés par celui-ci dans le volume de sonde (5) pour les interférences.

10. Dispositif selon la revendication précédente,
**caractérisé en ce que**
dans le trajet optique du laser, le deuxième prisme (13) est disposé avant le premier prisme (4) et celui-ci est disposé avant l'élément de focalisation (3)
ou
dans le trajet optique du laser, le deuxième prisme (13) est disposé avant l'élément de focalisation (3) et celui-ci est disposé avant le premier prisme (4).

11. Dispositif selon la revendication précédente,
**caractérisé en ce que**
le laser (1)

• est un laser pulsé, plus particulièrement un laser à fibre optique pulsé,
• génère des impulsions avec une durée d'impulsion supérieure ou égale à 0,01 ns et/ou inférieure ou égale à 1000 ns, de préférence supérieure ou égale à 6 ns et/ou inférieure ou égale à 100 ns,
• génère des impulsions avec une fréquence de répétition des impulsions supérieure ou égale à 1 Hz et/ou inférieure ou égale à 100 MHz, de préférence supérieure ou égale à 1 kHz et/ou inférieure ou égale à 50 kHz,

et/ou

• présente une longueur d'onde dans le domaine IR, dans le domaine UV ou dans le domaine visible, de préférence de 355 nm à 1064 nm.

12. Dispositif selon l'une des revendications précédentes,
**caractérisé en ce que**
dans le trajet optique du laser (1) et de préférence avant l'élément de focalisation (3) et le premier prisme (4) se trouve(nt) un ou plusieurs des éléments suivants :

  • un multiplicateur de fréquence,
  • un modulateur acousto-optique,
  • un obturateur mécanique,
  • un homogénéisateur de faisceau conçu pour générer un profil d'intensité globalement constant sur la section transversale du faisceau,

et/ou

  • un polarisateur.

**13.** Dispositif de structuration d'interférences, plus particulièrement robot industriel pour la structuration d'interférences, avec
une base (14) stationnaire dans le système de coordonnées universel, plus particulièrement un châssis de base du robot industriel et
une unité cinématique (15), reliée avec la base (14), mobile avec une de ses extrémités (16) par rapport à la base (14), plus particulièrement la chaîne cinématique du robot industriel,
un dispositif selon l'une des revendications précédentes étant fixé au niveau de l'extrémité mobile (16) de l'unité cinématique.

**14.** Procédé de structuration d'interférences d'une sonde plate (P),
**caractérisé en ce que**
la structuration de la sonde (P) a lieu par l'utilisation d'un dispositif ou d'un système selon l'une des revendications précédentes.

von 1 = Laser

von 1 = Laser

12

12

11

11a

11b

11a

11b

2

b

3

4a

4a

4

2a

γ

2b

2a,2b

5

6

5,6

β

P

P

z

x

y

z

y

x

7,9

7,9

7,9

Siehe Fig. 1b

**Fig. 1a**

Fig. 1b

$$P = \frac{\lambda}{2 \sin (\beta/2)}$$

Fig. 2

Fig. 3

Fig. 4

Fig. 5

Fig. 6a

e) Roboter

15

16

1, 3, 4, 8a, 8b, ...
7

2a    2b

5    6

P

14

f) Rolle - zu - Rolle

1, 3, 4 ...

2b

2a

6

P

7

5

z

y    x

Fig. 6b

Fig. 7

a)

b)

EP 2 673 106 B1

Fig. 8a

Fig. 8b

| Wieder-holrate der Pulse Wr [KHz] | Pulsenergie [mJ] | Fokusgröße | | Fluenz [J/cm²] | Scangesch-windigkeit [m/s] bei 0% Überlapp | Maximalgeschwindigke it des Musterein-bringens [m²/min] bei 0% Überlapp |
|---|---|---|---|---|---|---|
| | | Länge in x [mm] | Länge in y [µm] | | | |
| 10 | 50 | 13 | 400 | 1,0 | 4 | 3,12 |
| 20 | 10 | 10 | 100 | 1,0 | 2 | 1,2 |
| 50 | 2 | 5 | 40 | 1,0 | 2 | 1,7 |
| 10 | 100 | 250 | 40 | 1,0 | 0.4 | 6 |

Fig. 9

EP 2 673 106 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6549309 B1
- US 5072091 A
- EP 1586405 A1
- DE 102005024086 A1
- JP 2003307700 A